(19) **Europäisches Patentamt / European Patent Office / Office européen des brevets**

(11) **EP 2 296 808 B1**

(12) **FASCICULE DE BREVET EUROPEEN**

(45) Date de publication et mention de la délivrance du brevet:
**16.07.2014 Bulletin 2014/29**

(21) Numéro de dépôt: **09754064.5**

(22) Date de dépôt: **13.05.2009**

(51) Int Cl.:
*B01J 21/04* (2006.01)   *B01J 21/08* (2006.01)
*B01J 29/04* (2006.01)   *B01J 29/06* (2006.01)
*B01J 29/18* (2006.01)   *B01J 29/40* (2006.01)
*B01J 29/65* (2006.01)   *B01J 29/70* (2006.01)
*B01J 29/80* (2006.01)   *B01J 35/08* (2006.01)
*B01J 35/10* (2006.01)   *C10G 45/12* (2006.01)
*C10G 45/64* (2006.01)   *C10G 47/20* (2006.01)

(86) Numéro de dépôt international:
**PCT/FR2009/000558**

(87) Numéro de publication internationale:
**WO 2009/144414 (03.12.2009 Gazette 2009/49)**

(54) **PROCEDE DE PREPARATION D'UN CATALYSEUR A BASE D'UN MATERIAU CRISTALLISE COMPRENANT DU SILICIUM À POROSITÉ HIÉRARCHISÉE ET ORGANISEE ET PROCEDE AMELIORE DE TRAITEMENT DE CHARGES HYDROCARBONEES**

HERSTELLUNGSVERFAHREN EINES KATALYSATORS BESTEHEND AUS EINEM KRISTALLISIERTEM SILIZIUMHALTIGEN MATERIAL MIT HIERARCHISCH STRUKTURIERTER UND ORGANISIERTER POROSITÄT SOWIE VERBESSERTES VERFAHREN ZUR BEHANDLUNG VON KOHLENWASSERSTOFFSTRÖMEN

PROCESS FOR PREPARING A CATALYST COMPRISING A CRYSTALLIZED MATERIAL CONTAINING SILICON HAVING HIERARCHICAL AND ORGANIZED POROSITY, AND IMPROVED METHOD FOR TREATING HYDROCARBON FEEDS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **28.05.2008 FR 0802953**

(43) Date de publication de la demande:
**23.03.2011 Bulletin 2011/12**

(73) Titulaire: **IFP Energies nouvelles**
**92852 Rueil-Malmaison Cedex (FR)**

(72) Inventeurs:
• **BONDUELLE, Audrey**
  **F-69340 Francheville (FR)**
• **CHAUMONNOT, Alexandra**
  **F-69008 Lyon (FR)**

(56) Documents cités:
**EP-A- 1 108 678    EP-A- 1 627 852**

**WO-A-01/32558    WO-A-01/38223**
**WO-A-2006/128989    US-A- 5 902 564**

• **ZHANG ET AL: "Preparation and characterization of Beta/MCM-41 composite zeolite with a stepwise-distributed pore structure" POWDER TECHNOLOGY, ELSEVIER SEQUOIA, LAUSANNE, CH, vol. 183, no. 1, 21 novembre 2007 (2007-11-21), pages 73-78, XP022514023 ISSN: 0032-5910**
• **TRONG ON D ET AL: "An example of mesostructured zeolitic material: UL-TS-1" MICROPOROUS AND MESOPOROUS MATERIALS, ELSEVIER SCIENCE PUBLISHING, NEW YORK, US, vol. 44-45, 6 avril 2001 (2001-04-06), pages 435-444, XP004247176 ISSN: 1387-1811**

• LEE ET AL: "Synthesis of highly stable mesoporous aluminosilicates from commercially available zeolites and their application to the pyrolysis of woody biomass" CATALYSIS TODAY, ELSEVIER, vol. 132, no. 1-4, 22 janvier 2008 (2008-01-22), pages 68-74, XP022495456 ISSN: 0920-5861

**Description**

La présente invention se rapporte au domaine des catalyseurs bifonctionnels caractérisés par des propriétés hydro-déshydrogénante et d'acidité. Elle concerne plus particulièrement un <u>procédé de préparation d'un</u> catalyseur comprenant au moins un matériau métallosilicate et plus précisément aluminosilicate cristallisé présentant une porosité hiérarchisée et organisée dans le domaine de la microporosité et de la mésoporosité et au moins un élément hydrodéshydrogénant.

L'invention concerne également les procédés d'hydrocraquage, d'hydroconversion et d'hydrotraitement mettant en oeuvre ce catalyseur.

En particulier, l'invention concerne l'hydrocraquage de charges hydrocarbonées contenant par exemple des composés aromatiques, et/ou oléfiniques, et/ou naphténiques, et/ou paraffiniques à l'exclusion des charges issues du procédé Fischer-Tropsch et contenant éventuellement des métaux, et/ou de l'azote, et/ou de l'oxygène et/ou du soufre.

L'objectif du procédé d'hydrocraquage est essentiellement la production de distillats moyens, c'est-à-dire de coupes à point d'ébullition initial d'au moins 150°C et final allant jusqu'à avant le point d'ébullition initial du résidu, par exemple inférieur à 340°C, ou encore à 370°C.

L'invention concerne également l'hydrotraitement de charges hydrocarbonées telles que les coupes pétrolières, les coupes issues du charbon ou les hydrocarbures produits à partir du gaz naturel. Ces charges hydrocarbonées comportent de l'azote et/ou du soufre et/ou des composés aromatiques et/ou oléfiniques et/ou naphténiques et/ou paraffiniques, lesdites charges contenant éventuellement des métaux et/ou de l'oxygène et/ou du soufre. Par hydrotraitement on entend les réactions d'hydrogénation, d'hydrodésulfuration, d'hydrodésazotation, d'hydrodéoxygénation, d'hydrodésaromatisation et d'hydrodémétallation.

État de la technique antérieure

L'hydrocraquage de coupes pétrolières lourdes est un procédé très important du raffinage qui permet de produire, à partir de charges lourdes excédentaires et peu valorisables, des fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant fournir d'excellentes bases pour huiles. Par rapport au craquage catalytique, l'intérêt de l'hydrocraquage catalytique est de fournir des distillats moyens, carburéacteurs et gazoles, de très bonne qualité. Inversement l'essence produite présente un indice d'octane beaucoup plus faible que celle issue du craquage catalytique.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou deux étapes.

Les catalyseurs d'hydrocraquage utilisés dans les procédés d'hydrocraquage sont tous du type bifonctionnel associant une fonction acide à une fonction hydro-déshydrogénante. La fonction acide est apportée par des supports dont les surfaces varient généralement de 150 à 800 m$^2$.g$^{-1}$ et présentant une acidité superficielle, telles que les alumines halogénées (chlorées ou fluorées notamment), les combinaisons d'oxydes de bore et d'aluminium, les aluminosilicates mésoporeux amorphes et les zéolithes. La fonction hydro-déshydrogénante est apportée soit par un ou plusieurs métaux du groupe VIB de la classification périodique des éléments, soit par une association d'au moins un métal du groupe VIB de la classification périodique avec au moins un métal du groupe VIII.

L'équilibre entre les deux fonctions acide et hydro-déshydrogénante est un des paramètres qui régit l'activité et la sélectivité du catalyseur. Une fonction acide faible et une fonction hydro-déshydrogénante forte donnent des catalyseurs peu actifs, travaillant à une température en général élevée (supérieure ou égale à 390-400°C) et avec une vitesse spatiale d'alimentation faible (la VVH exprimée en volume de charge à traiter par unité de volume de catalyseur et par heure est généralement inférieure ou égale à 2), mais dotés d'une très bonne sélectivité en distillats moyens (carburéacteurs et gazoles). Inversement, une fonction acide forte et une fonction hydro-déshydrogénante faible donnent des catalyseurs actifs, mais présentant de moins bonnes sélectivités en distillats moyens.

Un type de catalyseurs conventionnels d'hydrocraquage est à base de supports amorphes modérément acides, tels les aluminosilicates mésoporeux par exemple. Ces systèmes sont utilisés pour produire des distillats moyens de bonne qualité et, éventuellement, des bases huiles. Ces catalyseurs sont par exemple utilisés dans les procédés en une étape. L'inconvénient de ces catalyseurs à base d'un support mésoporeux amorphe conventionnel est leur faible activité.

Les catalyseurs comportant par exemple de la zéolithe Y de type structural FAU, ou les catalyseurs comportant par exemple une zéolithe de type bêta (type structural BEA) présentent quant à eux une activité catalytique supérieure à celle des aluminosilicates mésoporeux amorphes, mais présentent des sélectivités en distillats moyens (carburéacteurs et gazoles) qui sont plus faibles.

Un des challenges scientifiques de ces dernières années consiste à développer de nouveaux supports aluminosilicates cristallisés ou non qui présenteraient un compromis acceptable entre activité catalytique et sélectivité en distillats moyens et qui se situeraient à mi-chemin entre un comportement de type zéolithique et un comportement de type aluminosilicate mésoporeux amorphe.

D'autre part, la proportion des composés dits "lourds" dans les charges brutes à traiter devenant de plus en plus importante, le développement de catalyseurs présentant des propriétés texturales adaptées à ces nouvelles charges représente également un enjeu majeur.

Dans cette quête de nouveaux matériaux aluminosilicates, les matériaux dits "mésostructurés", découverts au début des années 90, représentent une alternative séduisante (G. J. de A. A. Soler-Illia, C. Sanchez, B. Lebeau, J. Patarin, Chem. Rev., 2002, 102, 4093). En effet, grâce à des méthodes de synthèse dites de "chimie douce", des matériaux mésoporeux amorphes dont la taille et la morphologie des pores sont contrôlées ont été obtenus. Ces matériaux mésostructurés sont ainsi générés à basse température par la coexistence en solution aqueuse ou dans des solvants polaires de précurseurs inorganiques avec des agents structurants, généralement des tensioactifs moléculaires ou supramoléculaires, ioniques ou neutres. Le contrôle des interactions électrostatiques ou par liaisons hydrogènes entre les précurseurs inorganiques et l'agent structurant conjointement lié à des réactions d'hydrolyse / condensation du précurseur inorganique conduit à un assemblage coopératif des phases organique et inorganique générant des agrégats micellaires de tensioactifs de taille uniforme et contrôlée au sein d'une matrice inorganique. Ce phénomène d'auto-assemblage coopératif, régi entre autres par la concentration en agent structurant, peut être induit par évaporation progressive d'une solution de réactifs dont la concentration en agent structurant est inférieure à la concentration micellaire critique, ce qui peut conduire par exemple à la formation d'une poudre mésostructurée après atomisation de la solution (technique aérosol). La libération de la porosité est ensuite obtenue par élimination du tensioactif, celle-ci étant réalisée classiquement par des procédés d'extraction chimique ou par traitement thermique. En fonction de la nature des précurseurs inorganiques et de l'agent structurant employé ainsi que des conditions opératoires imposées, plusieurs familles de matériaux mésostructurés ont été développées. Pour exemple, la famille M41 S initialement développée par Mobil (J. S. Beck, J. C. Vartuli, W. J. Roth, M. E. Leonowicz, C. T. Kresge, K. D. Schmitt, C. T.-W. Chu, D. H. Olson, E. W. Sheppard, S. B. McCullen, J. B. Higgins, J. L. Schlenker, J. Am. Chem. Soc., 1992, 114, 27, 10834), constituée de matériaux mésoporeux obtenus via l'emploi de surfactants ioniques comme des sels d'ammonium quaternaire, possédant une structure généralement hexagonale, cubique ou lamellaire, des pores de taille uniforme comprise dans une gamme de 1,5 à 10 nm et des parois amorphes d'épaisseur de l'ordre de 1 à 2 nm a largement été étudiée. De même, l'utilisation d'agents structurants macromoléculaires amphiphiles de type copolymères à bloc, a conduit à l'élaboration de la famille de matériaux dénommée SBA, ces solides étant caractérisés par une structure généralement hexagonale, cubique ou lamellaire, des pores de taille uniforme comprise dans une gamme de 4 à 50 nm et des parois amorphes d'épaisseur comprise dans une gamme de 3 à 7 nm.

Cependant, il a été montré que, bien que présentant des propriétés texturales et structurales particulièrement intéressantes (en particulier pour le traitement des charges lourdes), les matériaux aluminosilicates mésostructurés ainsi obtenus développaient une activité catalytique en tout point semblable à celle de leurs homologues à porosité non organisée (D. Zaho, J. Feng, Q. Huo, N. Melosh, G. H. Fredrickson, B. F. Chmelke, G. D. Stucky, Science, 1998, 279, 548 ; Y. -H. Yue, A. Gédéon, J. -L. Bonardet, J. B. d'Espinose, N. Melosh, J. Fraissard, Stud. Surf. Sci. Catal., 2000, 129, 209). De nombreux travaux ont donc été entrepris dans le but de développer des matériaux présentant une microporosité de nature zéolithique et une porosité mésostructurée de façon à bénéficier simultanément des propriétés catalytiques propres aux zéolithes et des propriétés catalytiques et surtout texturales de la phase mésoporeuse organisée.

Un grand nombre de techniques de synthèse permettant de générer des matériaux présentant cette bi-porosité ont ainsi été répertoriées dans la littérature ouverte (US 6 669 924 ; Z. Zhang, Y. Han, F. Xiao, S. Qiu, L. Zhu, R. Wang, Y. Yu, Z. Zhang, B. Zou, Y. Wang, H. Sun, D. Zhao, Y. Wei, J. Am. Chem. Soc., 2001, 123, 5014 ; A. Karlsson, M. Stöcker, R. Schmidt, Micropor. Mesopor. Mater., 1999, 27, 181 ; P. Prokesova, S. Mintova, J. Cejka, T. Bein, Micropor. Mesopor. Mater., 2003, 64, 165 ; D. T. On, S. Kaliaguine, Angew. Chem. Int. Ed., 2002, 41, 1036). D'un point de vue expérimental, à l'inverse de la technique "aérosol" citée préalablement, les matériaux aluminosilicates à porosité hiérarchisée ainsi définis ne sont pas obtenus par une concentration progressive des précurseurs inorganiques et de(s) l'agent(s) structurant(s) au sein de la solution où ils sont présents mais sont classiquement obtenus par précipitation directe au sein d'une solution aqueuse ou dans des solvants polaires en jouant sur la valeur de la concentration micellaire critique de l'agent structurant. De plus, la synthèse de ces matériaux obtenue par précipitation nécessite une étape de mûrissement en autoclave ainsi qu'une étape de filtration de la suspension générée. Les particules élémentaires habituellement obtenues ne présentent pas de forme régulière et sont caractérisées généralement par une taille variant généralement entre 200 et 500 nm et parfois plus.

*Résumé de l'invention*

L'invention concerne un <u>procédé de préparation d'un</u> catalyseur <u>selon la revendication 1</u> comprenant, au moins

un matériau cristallisé comprenant du silicium à porosité hiérarchisée et organisée et au moins un élément hydro-déshydrogénant choisi dans le groupe formé par les éléments du groupe VIB et/ou du groupe VIII de la classification périodique. Ledit matériau cristallisé comprenant du silicium à porosité hiérarchisée et organisée est constitué d'au moins deux particules sphériques élémentaires, chacune desdites particules comprenant une matrice à base d'oxyde de silicium, mésostructurée, ayant un diamètre de mésopores compris entre 1,5 et 30 nm et présentant des parois microporeuses et cristallisées d'épaisseur comprise entre 1,5 et 60 nm, lesquelles sont constituées d'entités zéolithiques à l'origine de la microporosité du matériau, lesdites particules sphériques élémentaires ayant un diamètre maximal de 200 microns. Lesdites entités zéolithiques sont préparées à partir de réactifs utilisés pour la synthèse de zéolithes ou de solides apparentés développant des propriétés d'acidité. Ainsi, les formulations conduisant à toute zéolithe ou solide apparenté développant des propriétés d'acidité peuvent être utilisées. Il en résulte que ladite matrice à base d'oxyde de silicium comprend, en outre, au moins un élément X, la nature chimique de X étant fonction de la composition desdites formulations employées. Avantageusement, X est l'élément aluminium. Le catalyseur renferme également éventuellement au moins un élément dopant en quantité contrôlée choisi parmi le phosphore, le bore et le silicium, éventuellement au moins un élément du groupe VB de la classification périodique des éléments, de préférence le niobium, et éventuellement un élément du groupe VIIA, de préférence le fluor. De plus, la présente invention concerne les procédés d'hydrocraquage, d'hydroconversion et d'hydrotraitement mettant en oeuvre ce catalyseur.

Intérêt de l'invention

Le matériau cristallisé comprenant du silicium à porosité hiérarchisée et organisée constitutif du catalyseur préparé selon l'invention constitué d'une matrice inorganique mésostructurée, à base d'oxyde de silicium, aux parois microporeuses et cristallisées, présente simultanément les propriétés structurales, texturales et d'acido-basicité propres aux matériaux de la famille des zéolithes et aux matériaux dits mésostructurés. La matrice à base d'oxyde de silicium formant chacune des particules sphériques élémentaires du matériau utilisé dans le catalyseur préparé selon l'invention comprend, outre du silicium, au moins un élément X, X étant avantageusement l'aluminium. Le matériau utilisé dans le catalyseur préparé selon l'invention présente alors, des propriétés d'acido-basicité supérieures aux propriétés d'acido-basicité présentées par des matériaux aluminosilicates aux parois amorphes, dépourvus d'entités zéolithiques cristallisées, et préparés selon des protocoles de synthèse bien connus de l'Homme du métier utilisant des précurseurs inorganiques de silice et d'alumine. Par ailleurs, la présence au sein d'une même particule sphérique de taille micrométrique voire nanométrique de mésopores organisés dans une matrice inorganique microporeuse et cristallisée conduit à un accès privilégié des réactifs et des produits de la réaction aux sites microporeux lors de l'emploi du matériau comme élément constitutif du catalyseur préparé selon l'invention dans des procédés d'hydrocraquage, d'hydroconversion et d'hydrotraitement. De plus, le matériau utilisé dans le catalyseur préparé selon l'invention est constitué de particules élémentaires sphériques, le diamètre de ces particules étant au maximum égal à 200 $\mu$m, de préférence inférieur à 100 $\mu$m, variant avantageusement de 50 nm à 20 $\mu$m, très avantageusement de 50 nm à 10 $\mu$m et de manière encore plus avantageuse de 50 nm à 3 $\mu$m. La taille limitée de ces particules ainsi que leur forme sphérique homogène permet d'avoir une meilleure diffusion des réactifs et des produits de la réaction lors de l'emploi du matériau comme élément constitutif du catalyseur préparé selon l'invention dans des procédés d'hydrocraquage, d'hydroconversion et d'hydrotraitement comparativement à des catalyseurs connus de l'état de la technique mais permet également de limiter le sur-craquage possible des produits car le libre parcours moyen de la molécule au sein de la particule est plus petit.

L'ensemble des propriétés propres au matériau cristallisé comprenant du silicium à porosité hiérarchisée et organisée induit donc des propriétés catalytiques spécifiques au catalyseur préparé selon l'invention comprenant ledit matériau lors de son utilisation dans des procédés d'hydrocraquage, d'hydroconversion et d'hydrotraitement. En effet, les travaux de recherche effectués par le demandeur sur ces solides innovants et sur les phases actives hydro-déshydrogénantes, l'ont conduit à découvrir qu'un catalyseur d'hydrocraquage de charges hydrocarbonées comprenant au moins ledit matériau cristallisé comprenant du silicium à porosité hiérarchisée et organisée, au moins un métal hydro-déshydrogénant choisi, par exemple, parmi les métaux des groupe VIB et/ou VIII, éventuellement au moins un élément dopant choisi dans le groupe formé par le bore, le silicium et le phosphore, éventuellement au moins un élément du groupe VB de la classification périodique des éléments (de préférence le niobium), et éventuellement un élément du groupe VIIA (de préférence le fluor), permet d'obtenir des activités (c'est à dire des niveaux de conversion) élevées par rapport à celles générées par des catalyseurs conventionnels à base d'aluminosilicates amorphes à porosité non organisée et des sélectivités en distillats moyens (carburéacteur et gasoil) plus élevées qu'avec les catalyseurs zéolithiques connus dans l'art antérieur. En effet, la plus grande proximité des sites acides et hydrogénants résultant d'une dispersion de la phase métallique directement sur la matrice inorganique évite aux molécules déjà craquées sur un premier sites acide d'être à nouveau craquées : elles ont une probabilité importante de s'hydrogéner sur un site métallique.

*Techniques de caractérisation*

Le catalyseur ainsi que le support formé dudit matériau cristallisé comprenant du silicium à porosité hiérarchisée et organisée <u>préparés</u> selon l'invention sont caractérisés par plusieurs techniques d'analyses et notamment par Diffraction des Rayons X aux bas angles (DRX aux bas angles), par diffraction des rayons X aux grands angles (DRX), par Volumétrie à l'azote (BET), par Microscopie Électronique à Transmission (MET) éventuellement couplée à une analyse par spectrométrie de rayons X à sélection d'énergie (EDX), par microsonde de Castaing, par microsonde électronique et par Fluorescence X (FX) ou Absorption Atomique (AA).

La technique de Diffraction des Rayons X aux bas angles (valeurs de l'angle $2\theta$ comprises entre 0,5 et 3°) permet de caractériser la périodicité à l'échelle nanométrique générée par la mésoporosité organisée du catalyseur <u>préparé</u> selon l'invention. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1,5406 Å). Les pics habituellement observés sur les diffractogrammes correspondants à une valeur donnée de l'angle $2\theta$ sont associés aux distances inter réticulaires $d_{(hkl)}$ caractéristiques de la symétrie structurale du matériau, ((hkl) étant les indices de Miller du réseau réciproque) par la relation de Bragg : 2 d $_{(hkl)}$ * sin $(\theta)$ = n * $\lambda$. Cette indexation permet alors la détermination des paramètres de maille (abc) du réseau direct, la valeur de ces paramètres étant fonction de la structure hexagonale, cubique, ou vermiculaire obtenue et caractéristique de l'organisation périodique des mésopores du catalyseur <u>préparé</u> selon l'invention.

La technique de diffraction des rayons X aux grands angles (valeurs de l'angle $2\theta$ comprises entre 5 et 70°) permet de caractériser un solide cristallisé défini par la répétition d'un motif unitaire ou maille élémentaire à l'échelle moléculaire. Comme pour la diffraction des rayons X aux bas angles, les pics observés sur les diffractogrammes correspondants à une valeur donnée de l'angle $2\theta$ sont associés aux distances inter-réticulaires $d_{(hkl)}$ caractéristiques de la (des) symétrie(s) structurale(s) du matériau, ((hkl) étant les indices de Miller du réseau réciproque) par la relation de Bragg : 2 d $_{(hkl)}$ * sin $(\theta)$ = n * $\lambda$. Cette indexation permet alors la détermination des paramètres de maille (abc) du réseau direct. L'analyse DRX aux grands angles est donc adaptée à la caractérisation structurale des entités zéolithiques constitutives de la paroi cristallisée de la matrice de chacune des particules sphériques élémentaires constituant le matériau présent dans le catalyseur <u>préparé</u> selon l'invention. En particulier, elle permet d'accéder au diamètre des micropores des entités zéolithiques.

La Volumétrie à l'azote qui correspond à l'adsorption physique de molécules d'azote dans la porosité du matériau via une augmentation progressive de la pression à température constante renseigne sur les caractéristiques texturales (diamètre de pores, type de porosité, surface spécifique) particulières du matériau présent dans le catalyseur <u>préparé</u> selon l'invention. En particulier, elle permet d'accéder à la valeur totale du volume microporeux et mésoporeux du matériau présent dans le catalyseur <u>préparé</u> selon l'invention. L'allure de l'isotherme d'adsorption d'azote et de la boucle d'hystérésis peut renseigner sur la présence de la microporosité liée aux entités zéolithiques constituant les parois cristallisées de la matrice de chacune des particules sphériques du matériau présent dans le catalyseur <u>préparé</u> selon l'invention et sur la nature de la mésoporosité. L'analyse quantitative de la microporosité du matériau selon l'invention est effectuée à partir des méthodes "t" (méthode de Lippens-De Boer, 1965) ou "$\alpha_s$" (méthode proposée par Sing) qui correspondent à des transformées de l'isotherme d'adsorption de départ comme décrit dans l'ouvrage *"Adsorption by powders and porous solids. Principles, methodology and applications"* écrit par F. Rouquerol, J. Rouquerol et K. Sing, Academic Press, 1999. Ces méthodes permettent d'accéder en particulier à la valeur du volume microporeux caractéristique de la microporosité du matériau présent dans le catalyseur <u>préparé</u> selon l'invention ainsi qu'à la surface spécifique de l'échantillon. Le solide de référence utilisé est une silice LiChrospher Si-1000 (M. Jaroniec, M. Kruck, J. P. Olivier, Langmuir, 1999, 15, 5410). Concernant la matrice mésostructurée, la différence entre la valeur du diamètre des mésopores $\phi$ et la distance de corrélation entre mésopores d défini par DRX aux bas angles comme décrit ci-dessus permet d'accéder à la grandeur e où e = d - $\phi$ et est caractéristique de l'épaisseur des parois cristallisées de la matrice mésostructurée du matériau présent dans le catalyseur <u>préparé</u> selon l'invention. De même, la courbe $V_{ads}$ (ml/g) = $f(\alpha_s)$ obtenue via la méthode $\alpha_s$ citée ci-dessus est caractéristique de la présence de microporosité au sein du matériau présent dans le catalyseur <u>préparé</u> selon l'invention et conduit à une valeur du volume microporeux comprise dans une gamme de 0,01 à 0,4 ml/g. La détermination du volume microporeux et mésoporeux total et du volume microporeux comme décrite ci-dessus conduit à une valeur du volume mésoporeux du matériau présent dans le catalyseur <u>préparé</u> selon l'invention dans une gamme de 0,01 à 1 ml/g, de préférence dans une gamme de 0,01 à 0,8 ml/g..

L'analyse par Microscopie Électronique à Transmission (MET) est une technique également largement utilisée pour caractériser la mésoporosité organisée du catalyseur <u>préparé</u> selon l'invention. Celle-ci permet la formation d'une image du solide étudié, les contrastes observés étant caractéristiques de l'organisation structurale, de la texture, de la morphologie ou bien de la composition chimique des particules observées, la résolution de la technique atteignant au maximum 0,2 nm. Dans l'exposé qui suit, les photos MET seront réalisées à partir de sections microtomes de l'échantillon afin de visualiser une section d'une particule sphérique élémentaire du matériau présent dans le catalyseur <u>préparé</u> selon l'invention. L'analyse de l'image permet également d'accéder aux paramètres d, $\phi$ et e caractéristiques de la matrice mésostructurée et définis précédemment. L'analyse de l'image permet également de visualiser la présence des entités zéolithiques constitutives des parois du matériau présent dans le catalyseur préparé selon l'invention.

La répartition et la localisation des éléments constituant la phase hydrogénante peuvent être déterminées par des techniques telles que la microsonde de Castaing (profil de répartition des divers éléments), la Microscopie Électronique à Transmission couplée à une analyse X des composants du catalyseurs (EDX), ou bien encore par l'établissement d'une cartographie de répartition des éléments présents dans le catalyseur par microsonde électronique. Ces techniques permettent de mettre en évidence la présence de ces éléments exogènes ajoutés après la synthèse du matériau cristallin à porosité hiérarchisée et organisée comprenant du silicium constitutif du catalyseur préparé selon l'invention. La répartition et la localisation des éléments du groupe VIB tels que le molybdène, le tungstène, du groupe VIII tels que le fer, le cobalt, le nickel, le platine, le palladium, du groupe VB tel que le niobium, du groupe VIIA tel que le fluor, peuvent être déterminées selon ces techniques. De même, la répartition et la localisation du bore, du silicium et du phosphore peuvent être déterminées selon ces techniques.

La composition globale du catalyseur préparé selon l'invention peut être déterminée par Fluorescence X (FX) sur le catalyseur à l'état pulvérulent ou par Absorption Atomique (AA) après attaque acide du catalyseur.

*Exposé détaillé de l'invention*

Plus précisément, l'invention porte sur un procédé de préparation selon la revendication 1 d'un catalyseur comprenant :

- au moins un support formé d'au moins un matériau cristallisé comprenant du silicium à porosité hiérarchisée et organisée et constitué d'au moins deux particules sphériques élémentaires, chacune desdites particules comprenant une matrice à base d'oxyde de silicium, mésostructurée, ayant un diamètre de mésopores compris entre 1,5 et 30 nm et présentant des parois microporeuses et cristallisées constituées exclusivement d'entités zéolithiques d'épaisseur comprise entre 1,5 et 60 nm, lesdites particules sphériques élémentaires ayant un diamètre maximal de 200 microns,
- au moins une phase active contenant au moins un élément hydro-déshydrogénant du groupe VIB et /ou du groupe VIII de la classification périodique.

Conformément à l'invention, l'élément du groupe VIB est avantageusement présent à une teneur massique en oxyde métallique comprise entre 0,1 et 40%, de manière préférée entre 1,5 et 35%, et de manière encore plus préférée entre 3 et 35%, les pourcentages étant exprimés en % poids par rapport à la masse totale du catalyseur et l'élément du groupe VIII est avantageusement présent à une teneur massique en oxyde métallique comprise entre 0,1 et 25%, de manière préférée entre 0,1 et 20% et de manière encore plus préférée entre 0,1 à 15%, ledit matériau à porosité hiérarchisée est avantageusement présent à une teneur massique comprise entre 20 et 99,9%, de préférence entre 30 et 99,9% et de manière encore plus préférée entre 40 et 99,9%.

Le catalyseur préparé selon l'invention comprend :

- éventuellement au moins un élément dopant choisi dans le groupe constitué par le silicium (en plus du silicium contenu dans ledit matériau à porosité hiérarchisée présent dans le catalyseur préparé selon l'invention), le bore et le phosphore, présent à une teneur massique comprise entre 0 et 20%, de préférence entre 0,1 et 15%, de manière préférée entre 0,1 et 10% et de manière encore plus préférée entre 0,2 et 5%,
- éventuellement au moins un élément groupe VB, de préférence le niobium, présent à une teneur massique comprise entre 0 et 60%, de préférence entre 0,1 et 50%, et de manière encore plus préférée entre 0,1 et 40%,
- éventuellement au moins un élément du groupe VIIA, de préférence le fluor, présent à une teneur massique comprise entre 0 et 20%, de préférence entre 0,1 et 15% et de manière encore plus préférée entre 0,1 et 10%,
- éventuellement un liant tel que la silice, l'alumine, les argiles, l'oxyde de titane, l'oxyde de bore et la zircone et tout mélange des liants précédemment cités. Les liants préférés sont la silice et l'alumine et de manière encore plus préférée l'alumine. La teneur pondérale en liant sur le catalyseur est comprise entre 0 et 30%, de manière préférée entre 0 et 20%. Le catalyseur préparé selon l'invention est préférentiellement dépourvu de liant.

Selon un premier mode de réalisation du catalyseur préparé selon l'invention, l'élément hydro-déshydrogénant de ladite phase active comprise dans ledit catalyseur est un élément choisi dans le groupe formé par les éléments du groupe VIB et est de préférence choisi parmi le molybdène et le tungstène.

Selon un mode préféré dudit premier mode de réalisation du catalyseur préparé selon l'invention, l'élément hydro-déshydrogénant de ladite phase active comprise dans ledit catalyseur est un élément choisi dans le groupe formé par les éléments du groupe VIB de la classification périodique est le molybdène.

Selon un autre mode préféré dudit premier mode de réalisation du catalyseur préparé selon l'invention, l'élément hydro-déshydrogénant choisi dans le groupe formé par les éléments du groupe VIB de la classification périodique est le tungstène.

Selon un deuxième mode de réalisation dudit catalyseur préparé selon l'invention, l'élément hydro-déshydrogénant de ladite phase active comprise dans ledit catalyseur est un élément choisi dans le groupe formé par les éléments du groupe VIII et est de préférence choisi parmi le fer, le cobalt, le nickel, le ruthénium, le rhodium, le palladium, l'osmium, l'iridium ou le platine, pris seuls ou en mélange, de manière très préférée choisi parmi le fer, le cobalt, le nickel, le platine, le palladium et le ruthénium, pris seuls ou en mélange, et de manière encore plus préférée choisi parmi le cobalt, le nickel et le platine, pris seuls ou en mélange.

Selon un mode préféré dudit deuxième mode de réalisation du catalyseur préparé selon l'invention, l'élément hydro-déshydrogénant choisi dans le groupe formé par les éléments du groupe VIII de la classification périodique, est le cobalt.

Selon un autre mode préféré dudit deuxième mode de réalisation du catalyseur préparé selon l'invention, l'élément hydro-déshydrogénant choisi dans le groupe formé par les éléments du groupe VIII de la classification périodique, est le nickel.

Selon encore un autre mode encore plus préféré dudit deuxième mode de réalisation du catalyseur préparé selon l'invention, l'élément hydro-déshydrogénant choisi dans le groupe formé par les éléments du groupe VIII de la classification périodique, est le platine.

Selon un troisième mode de réalisation du catalyseur préparé selon l'invention, ladite phase active comprise dans ledit catalyseur est formé d'au moins un élément du groupe VIB et d'au moins un élément du groupe VIII.

Conformément audit troisième mode de réalisation du catalyseur préparé selon l'invention, et d'une manière avantageuse on utilise comme phase active les associations de métaux suivantes : nickel-molybdène, cobalt-molybdène, fer-molybdène, fer-tungstène, nickel-tungstène, cobalt-tungstène, platine-palladium, de préférence les associations nickel-molybdène, cobalt-molybdène, cobalt-tungstène, nickel-tungstène et de façon encore plus préférée les associations nickel-moybdène et nickel-tungstène.

Il est également possible d'utiliser comme phase active des associations de trois métaux par exemple nickel-cobalt-molybdène, nickel-molybdène-tungstène, nickel-cobalt-tungstène, etc.. D'une manière avantageuse on utilise les associations de métaux suivantes : nickel-niobium-molybdène, cobalt-niobium-molybdène, fer-niobium-molybdène, nickel-niobium-tungstène, cobalt-niobium-tungstène, fer-niobium-tungstène et de préférence les associations nickel-niobium-molybdène, cobalt-niobium-molybdène.

Il est également possible d'utiliser comme phase active des associations de quatre métaux par exemple nickel-cobalt-niobium-molybdène. On peut également utiliser des associations contenant un métal noble tel que ruthénium-niobium-molybdène, ou encore ruthénium-nickel-niobium-molybdène.

Ledit matériau cristallisé comprenant du silicium à porosité hiérarchisée et organisée est constitué d'au moins deux particules sphériques élémentaires, chacune desdites particules comprenant une matrice à base d'oxyde de silicium, mésostructurée, ayant un diamètre de mésopores compris entre 1,5 et 30 nm et présentant des parois microporeuses et cristallisées d'épaisseur comprise entre 1,5 et 60 nm, lesdites particules sphériques élémentaires ayant un diamètre maximal de 200 microns.

Par matériau à porosité hiérarchisée et organisée, on entend au sens de la présente invention un matériau présent dans le catalyseur préparé selon l'invention présentant une double porosité à l'échelle de chacune desdites particules sphériques : une mésoporosité, c'est-à-dire la présence de pores organisés à l'échelle mésoporeuse ayant un diamètre uniforme compris entre 1,5 et 30 nm et de préférence entre 4 et 30 nm et de manière très préférée entre 5 et 20 nm, répartis de façon homogène et régulière dans chacune desdites particules (mésostructuration) et une microporosité de type zéolithique dont les caractéristiques (type structural de la zéolithe, composition chimique de la charpente zéolithique) sont fonction des entités zéolithiques constituant les parois cristallisées de la matrice de chacune des particules sphériques du matériau présent dans le catalyseur préparé selon l'invention. Le matériau présent dans le catalyseur préparé selon l'invention présente également une(des) macroporosité(s) texturale(s) intra et/ou interparticulaire. Il est à noter qu'une porosité de nature microporeuse peut également résulter de l'imbrication du tensioactif, utilisé lors de la préparation du matériau présent dans le catalyseur préparé selon l'invention, avec la paroi inorganique au niveau de l'interface organique-inorganique développée lors de la mésostructuration de la composante inorganique dudit matériau présent dans le catalyseur préparé selon l'invention. Avantageusement, aucune des particules sphériques constituant le matériau présent dans le catalyseur préparé selon l'invention ne présente de macropores.

La matrice à base d'oxyde de silicium, comprise dans chacune des particules sphériques constituant le matériau présent dans le catalyseur préparé selon l'invention, est mésostructurée : elle présente des mésopores ayant un diamètre uniforme, c'est-à-dire identique pour chaque mésopore, compris entre 1,5 et 30 nm et de préférence entre 4 et 30 nm et de manière très préférée entre 5 et 20 nm, répartis de façon homogène et régulière dans chacune des particules sphériques. La matière située entre les mésopores de chacune desdites particules sphériques est microporeuse et cristallisée et forme des parois, ou murs, dont l'épaisseur est comprise entre 1 et 60 nm, de préférence entre 2,5 et 30 nm et de manière très préférée entre 4 et 30 nm. L'épaisseur des parois correspond à la distance séparant un premier mésopore d'un second mésopore, le second mésopore étant le pore le plus proche dudit premier mésopore. L'organisation de la mésoporosité décrite ci-dessus conduit à une structuration de la matrice à base d'oxyde de silicium, laquelle peut être hexagonale, vermiculaire ou cubique et de façon préférée vermiculaire en fonction de la nature du tensioactif employé pour la préparation dudit matériau. L'analyse DRX aux petits angles permet de calculer la distance d de corrélation entre les mésopores organisés dudit matériau : la distance d de corrélation entre les mésopores organisés dudit matériau est comprise entre 6 et 50 nm, de préférence entre 8 et 30 nm et de manière très préférée entre 9 et 25 nm.

La matrice à base d'oxyde de silicium formant chacune des particules sphériques du matériau présent dans le catalyseur préparé selon l'invention présente parois cristallisées constituées exclusivement d'entités zéolithiques, lesquelles sont à l'origine de la microporosité présente au sein de chacune des particules sphériques du matériau présent dans le catalyseur préparé selon l'invention. Toute zéolithe ou solide apparenté développant des propriétés d'acidité et en particulier, mais de façon non exhaustive, celles répertoriées dans l'"Atlas of zeolite framework types", 5th revised Edition, 2001, C. Baerlocher, W. M. Meier, D. H. Olson peut être employée pour la formation des entités zéolithiques constituant exclusivement les parois cristallisées de la matrice de chacune des particules du matériau présent dans le catalyseur préparé selon l'invention dès lors que la mise en solution des éléments précurseurs de ces entités, à savoir au moins un agent structurant, au moins un précurseur silicique et au moins un précurseur d'au moins un élément X, X étant avantageusement l'aluminium, conformément à l'étape a) du premier procédé de préparation du matériau cristallin à porosité hiérarchisée et organisée décrit ci-après, que l'obtention de nanocristaux zéolithiques de taille nanométrique maximale égale à 60 nm à partir d'au moins un agent structurant, au moins un précurseur silicique et au moins un précurseur d'au moins un élément X, X étant avantageusement l'aluminium, conformément à l'étape a') du deuxième procédé de préparation du matériau cristallin à porosité hiérarchisée et organisée décrit ci-après et que la redispersion en solution de cristaux zéolithiques conformément à l'étape a") du troisième procédé de préparation du matériau cristallin à porosité hiérarchisée et organisée tel que décrit ci-après, conduise à l'obtention d'une solution stable, c'est-à-dire limpide ou colloïdale, et atomisable. Les entités zéolithiques constituant exclusivement les parois cristallisées de la matrice de chacune des particules du matériau présent dans le catalyseur préparé selon l'invention et à l'origine de la microporosité de celui-ci comprennent au moins une zéolithe choisie parmi les aluminosilicates ZSM-5, ZSM-48, ZSM-22, ZSM-23, ZBM-30, EU-1, EU-2, EU-11, Bêta, zéolithe A, Y, USY, VUSY, SDUSY, mordénite, NU-87, NU-88, NU-86, NU-85, IM-5, IM-12, IZM-2 et Ferriérite et/ou au moins un solide apparenté choisi parmi les silicoaluminophosphates SAPO-11 et SAPO-34. De manière très préférée, les entités zéolithiques constituant intégralement les parois cristallisées et microporeuses de la matrice de chacune des particules du matériau présent dans le catalyseur présent selon l'invention sont des espèces pour l'amorce d'au moins une zéolithe choisie parmi les aluminosilicates de type structural MFI, BEA, FAU, LTA et/ou au moins un solide apparenté choisie parmi les silicoaluminophosphates de type structural AEL, CHA. Il en résulte que ladite matrice à base d'oxyde de silicium comprend, en outre, au moins un élément X, la nature chimique de X étant fonction de la nature chimique desdites entités zéolithiques employées et étant l'un des éléments suivants : l'aluminium, le fer, le germanium, le bore et le titane. Avantageusement, X est l'élément aluminium. Dans ce cas, la matrice du matériau est dans ce cas un aluminosilicate cristallisé.

On entend par zéolithe ou solide apparenté bien connus de l'Homme du métier l'ensemble des solides oxydes microporeux cristallisés dont les éléments atomiques constitutifs de la charpente inorganique présentent une coordinance IV. Par définition, la dénomination "zéolithe" est attribuée auxdits solides oxydes microporeux siliciques ou aluminosiliciques. De même, la dénomination "solide apparenté" concerne l'ensemble des solides oxydes microporeux cristallisés dont les éléments atomiques constitutifs de la charpente inorganique présentent une coordinance IV, lesdits solides oxydes microporeux siliciques ou aluminosiliciques étant exclus. Toute zéolithe ou solide apparenté présentant au moins un élément atomique trivalent à l'origine de la présence d'une charge négative de ladite charpente et qui peut être compensé par une charge positive de nature protonique peut développer des propriétés d'acidité. En particulier, les zéolithes de type aluminosilicate et les solides apparentés de type silicoaluminosphosphate développent de telles propriétés.

Conformément à l'invention, lesdites particules sphériques élémentaires constituant le matériau cristallin à porosité hiérarchisée et organisée présent dans le catalyseur préparé selon l'invention ont un diamètre maximal égal à 200 microns, de préférence inférieur à 100 microns, avantageusement compris entre 50 nm et 20 $\mu$m, très avantageusement compris entre 50 nm et 10 $\mu$m, et de manière encore plus avantageuse compris entre 50 nm et 3 $\mu$m. Plus précisément, elles sont présentes dans le matériau présent dans le catalyseur préparé selon l'invention sous la forme d'agrégats.

Le matériau cristallin à porosité hiérarchisée et organisée présent dans le catalyseur préparé selon l'invention présente avantageusement une surface spécifique comprise entre 100 et 1100 m$^2$/g et de manière très avantageuse comprise entre 250 et 1000 m$^2$/g.

Le matériau cristallin à porosité hiérarchisée et organisée présent dans le catalyseur préparé selon l'invention présente avantageusement un volume mésoporeux mesuré par Volumétrie à l'azote compris entre 0,01 et 1 ml/g, de préférence entre 0,01 et 0,80 ml/g, et un volume microporeux mesuré par Volumétrie à l'azote compris entre 0,01 et 0,4 ml/g.

Le catalyseur <u>préparé</u> selon l'invention présente avantageusement une surface spécifique comprise entre 70 et 1000 m$^2$/g et de manière très avantageuse comprise entre 80 et 800 m$^2$/g.

Le catalyseur <u>préparé</u> selon l'invention présente avantageusement un diamètre mésoporeux moyen compris entre 1,5 et 30 nm et de manière très avantageuse comprise entre 3 et 15 nm.

Le matériau cristallin à porosité hiérarchisée et organisée comprenant du silicium constitutif du catalyseur <u>préparé</u> selon l'invention est obtenu selon trois procédés de préparation possibles. Un premier mode de réalisation du procédé de préparation dudit matériau cristallin à porosité hiérarchisée et organisée, appelé par la suite "premier procédé de préparation <u>selon l'invention</u> dudit matériau présent dans le catalyseur", comprend : a) la préparation d'une solution limpide contenant les éléments précurseurs d'entités zéolithiques, à savoir au moins un agent structurant, au moins un précurseur silicique et au moins un précurseur d'au moins un élément X, X étant avantageusement l'aluminium ; b) le mélange en solution d'au moins un tensioactif et d'au moins ladite solution limpide obtenue selon a) tel que le rapport des volumes de matières inorganique et organique $V_{inorganique}/V_{organique}$ soit compris entre 0,26 et 4 ; c) l'atomisation par aérosol de ladite solution obtenue à l'étape b) pour conduire à la formation de gouttelettes sphériques ; d) le séchage desdites gouttelettes ; e) l'autoclavage des particules obtenues selon d) ; f) le séchage desdites particules obtenues selon e) et g) l'élimination dudit agent structurant et dudit tensioactif pour l'obtention d'un matériau cristallisé à porosité hiérarchisée et organisée dans les domaines de la microporosité et de la mésoporosité.

Un deuxième mode de réalisation du procédé de préparation dudit matériau cristallin à porosité hiérarchisée et organisée, appelé par la suite "deuxième procédé de préparation <u>selon l'invention</u> dudit matériau présent dans le catalyseur", comprend les étapes : a') la préparation, à partir d'au moins un agent structurant, d'au moins un précurseur silicique et d'au moins un précurseur d'au moins un élément X, X étant avantageusement l'aluminium, d'une solution contenant des nanocristaux zéolithiques de taille nanométrique maximale égale à 60 nm afin d'obtenir une solution colloïdale dans laquelle sont dispersés lesdits nanocristaux ; b') le mélange en solution d'au moins un tensioactif et d'au moins ladite solution obtenue selon a') tel que le rapport des volumes de matières inorganique et organique $V_{inorganique}/V_{organique}$ soit compris entre 0,26 et 4 ; c') l'atomisation par aérosol de ladite solution obtenue à l'étape b') pour conduire à la formation de gouttelettes sphériques ; d') le séchage desdites gouttelettes ; et g') l'élimination dudit agent structurant et dudit tensioactif pour l'obtention d'un matériau cristallisé à porosité hiérarchisée et organisée dans les domaines de la microporosité et de la mésoporosité.

Selon une première variante dudit deuxième procédé de préparation <u>selon l'invention</u> du matériau présent dans le catalyseur , ladite étape d') est avantageusement suivie d'une étape e') consistant à pratiquer l'autoclavage des particules obtenues selon d') puis d'une étape f) consistant à procéder au séchage desdites particules obtenues selon e'), ladite étape f) étant ensuite suivie de ladite étape g').

Selon une deuxième variante dudit deuxième procédé de préparation <u>selon l'invention</u> du matériau présent dans le catalyseur , l'étape b') est mise en oeuvre en mélangeant en solution au moins un tensioactif, au moins ladite solution colloïdale obtenue selon l'étape a') et au moins une solution limpide contenant les éléments précurseurs d'entités zéolithiques, à savoir au moins un agent structurant, au moins un précurseur silicique et au moins un précurseur d'au moins un élément X, X étant avantageusement l'aluminium. Ledit mélange est réalisé dans des conditions telles que le rapport des volumes $V_{inorganique}/V_{organique}$ de matières inorganique et organique engagées dans cette étape b') soit compris entre 0,26 et 4. Selon cette variante, l'étape d') dudit deuxième procédé de préparation du matériau présent dans le catalyseur <u>préparé</u> selon l'invention est suivie d'une étape e') consistant à pratiquer l'autoclavage des particules obtenues selon d') puis d'une étape f) consistant à pratiquer le séchage desdites particules obtenues selon e') avant la mise en oeuvre de ladite étape g') décrite ci-dessus pour la mise en oeuvre dudit deuxième procédé de préparation <u>selon l'invention</u> du matériau présent dans le catalyseur.

Un troisième procédé de préparation du matériau cristallin à porosité hiérarchisée et organisée, appelé par la suite "troisième procédé de préparation selon l'invention dudit matériau présent dans le catalyseur " comprend les étapes : a") la redispersion en solution de cristaux zéolithiques de façon à obtenir une solution colloïdale de nanocristaux zéolithiques de taille nanométrique maximale égale à 60 nm, b") le mélange en solution d'au moins un tensioactif, d'au moins ladite solution colloïdale obtenue selon a") et d'au moins une solution limpide contenant les éléments précurseurs d'entités zéolithiques, à savoir au moins un agent structurant, au moins un précurseur silicique et au moins un précurseur d'au moins un élément X, X étant avantageusement l'aluminium, ledit mélange étant tel que le rapport des volumes de matières inorganique et organique $V_{inorganique}/V_{organique}$ soit compris entre 0,26 et 4 ; c") l'atomisation par aérosol de ladite solution obtenue à l'étape b") pour conduire à la formation de gouttelettes sphériques ; d") le séchage desdites gouttelettes ; e") l'autoclavage des particules obtenues selon d") ; f") le séchage desdites particules obtenues selon e") et g") l'élimination dudit agent structurant et dudit tensioactif pour l'obtention d'un matériau cristallisé à porosité hiérarchisée et organisée dans les domaines de la microporosité et de la mésoporosité.

La solution limpide contenant les éléments précurseurs d'entités zéolithiques préparée au cours de l'étape a) du premier procédé de préparation <u>selon l'invention</u> du matériau présent dans le catalyseur, de l'étape b') de la deuxième variante du deuxième procédé de préparation <u>selon l'invention</u> du matériau présent dans le catalyseur et de l'étape b") du troisième procédé de préparation <u>selon l'invention</u> du matériau présent dans le catalyseur , et la solution colloïdale contenant des nanocristaux zéolithiques de taille nanométrique maximale égale à 60 nm préparées au cours des étapes a') et a") respectivement des deuxième et troisième procédés de préparation <u>selon l'invention</u> du matériau présent dans le catalyseur , sont préparées à partir de protocoles opératoires connus de l'Homme du métier.

Le précurseur silicique utilisé pour la mise en oeuvre des étapes a), a') et b") respectivement des premier, deuxième et troisième procédés de préparation du matériau présent dans le <u>catalyseur préparé selon l'invention</u> ainsi que pour la mise en oeuvre de l'étape b') de la deuxième variante du deuxième procédé de préparation du matériau présent dans le <u>catalyseur préparé selon l'invention</u>, est choisi parmi les précurseurs d'oxyde de silicium bien connus de l'Homme du métier. <u>Selon l'invention</u>, on utilise un précurseur silicique choisi parmi les précurseurs de silice habituellement utilisés dans la synthèse des zéolithes ou de solides apparentés, par exemple on utilise de la silice solide en poudre, de l'acide silicique, de la silice colloïdale, de la silice dissoute ou du tétraéthoxysilane encore appelé tétraéthylorthosilicate (TEOS). De manière préférée, le précurseur silicique est le TEOS.

Le précurseur de l'élément X, utilisé pour la mise en oeuvre des étapes a), a') et b") respectivement des premier, deuxième et troisième procédés de préparation du matériau présent dans le <u>catalyseur préparé selon l'invention</u> ainsi que pour la mise en oeuvre de l'étape b') de la deuxième variante du deuxième procédé de préparation du matériau présent dans le <u>catalyseur préparé selon l'invention</u>, peut être tout composé comprenant l'élément X et pouvant libérer cet élément en solution, notamment en solution aqueuse ou aquo-organique, sous forme réactive. Dans le cas avantageux où X est l'aluminium, le précurseur aluminique est un sel inorganique d'aluminium de formule $AlZ_3$, Z étant un halogène, un nitrate ou un hydroxyde. De préférence, Z est le chlore. Le précurseur aluminique peut également être un sulfate d'aluminium de formule $Al_2(SO_4)_3$. Le précurseur aluminique peut être aussi un précurseur organométallique de formule $Al(OR)_3$ ou R = éthyle, isopropyle, n-butyle, s-butyle $(Al(O^sC_4H_9)_3)$ ou t-butyle ou un précurseur chélaté tel que l'aluminium acétylacétonate $(Al(C_5H_8O_2)_3)$. De préférence, R est le s-butyle. Le précurseur aluminique peut aussi être de l'aluminate de sodium ou d'ammonium ou de l'alumine proprement dite sous l'une de ses phases cristallines connues de l'Homme du métier (alpha, delta, teta, gamma), de préférence sous forme hydratée ou qui peut être hydratée.

On peut également utiliser des mélanges des précurseurs cités ci-dessus. Certains ou l'ensemble des précurseurs aluminiques et siliciques peuvent éventuellement être ajoutés sous la forme d'un seul composé comprenant à la fois des atomes d'aluminium et des atomes de silicium, par exemple une silice-alumine amorphe.

L'agent structurant utilisé pour la mise en oeuvre des étapes a), a') et b") respectivement des premier, deuxième et troisième procédés de préparation du matériau présent dans le <u>catalyseur préparé selon l'invention</u> ainsi que pour la mise en oeuvre de l'étape b') de la deuxième variante du deuxième procédé de préparation <u>selon l'invention</u> du matériau présent dans le catalyseur peut être ionique ou neutre selon la zéolithe ou le solide apparenté à synthétiser. On <u>utilise</u> les agents structurants <u>suivants</u> : des cations organiques azotés tels que le tétrapropylammonium (TPA), des éléments de la famille des alcalins (Cs, K, Na, etc.), des éthercouronnes, des diamines ainsi que tout autre agent structurant bien connu de l'Homme du métier pour la synthèse de zéolithe.

La solution limpide contenant des éléments précurseurs d'entités zéolithiques (étape a) du premier procédé de préparation du matériau présent dans le <u>catalyseur préparé selon l'invention,</u> étape b') de la deuxième variante du deuxième procédé de préparation du matériau présent dans le <u>catalyseur préparé selon l'invention</u> et étape b") du troisième procédé de préparation du matériau présent dans le <u>catalyseur préparé selon l'invention</u> ainsi que la solution colloïdale (étape a') du deuxième procédé de préparation du matériau présent dans le <u>catalyseur préparé selon l'invention</u>, étape a") du troisième procédé de préparation du matériau présent dans le <u>catalyseur préparé selon l'invention</u> contenant des nanocristaux zéolithiques, employées pour la mise en oeuvre des différentes étapes des différents procédés de préparation <u>selon l'invention</u> du matériau présent dans le catalyseur, sont synthétisés selon des protocoles opératoires connus de l'Homme du métier. En particulier, des solutions limpides contenant des éléments précurseurs d'entités zéolithiques de type bêta ou des solutions colloïdales contenant des nanocristaux zéolithiques de type bêta sont réalisées à partir du protocole opératoire décrit par P. Prokesova, S. Mintova, J. Cejka, T. Bein et coll., Micropor. Mesopor. Mater., 2003, 64, 165. Des solutions limpides contenant des éléments précurseurs d'entités zéolithiques de type FAU ou des solutions colloïdales contenant des nanocristaux zéolithiques de type FAU sont réalisées à partir des protocoles opératoires décrits par Y. Liu, W. Z. Zhang, T. J. Pinnavaia et coil., J. Am. Chem. Soc., 2000, 122, 8791 et K. R. Kloetstra, H. W. Zandbergen, J. C. Jansen, H. vanBekkum, Microporous Mater., 1996, 6, 287. Des solutions limpides contenant des éléments précurseurs d'entités zéolithiques de type ZSM-5 ou des solutions colloïdales contenant des nanocristaux zéolithiques de type ZSM-5 sont réalisées à partir du protocole opératoire décrit par A. E. Persson, B. J. Schoeman, J. Sterte, J. -E. Otterstedt, Zeolites, 1995, 15, 611.

On obtient généralement la solution limpide contenant les éléments précurseurs d'entités zéolithiques selon les étapes a), b') et b") respectivement des premier procédé, deuxième variante du deuxième procédé et troisième procédés de préparation du matériau présent dans le catalyseur <u>préparé</u> selon l'invention ou bien on obtient la solution colloïdale contenant des nanocristaux zéolithiques de taille nanométrique maximale égale à 60 nm selon l'étape a') du deuxième procédé de préparation du matériau présent dans le catalyseur <u>préparé</u> selon l'invention en préparant un mélange réactionnel renfermant au moins un précurseur silicique, au moins un précurseur d'au moins un élément X, X étant avantageusement l'aluminium et au moins un agent structurant. Le mélange réactionnel est soit aqueux soit aquo-

EP 2 296 808 B1

organique, par exemple un mélange eau-alcool.

Conformément à l'étape a) du premier procédé de préparation du matériau présent dans le catalyseur <u>préparé</u> selon l'invention, le mélange réactionnel <u>est</u> mis sous conditions hydrothermales sous une pression autogène, éventuellement en ajoutant un gaz, par exemple de l'azote, à une température comprise entre la température ambiante et 200°C, de préférence entre la température ambiante et 170°C et de manière encore préférentielle à une température qui ne dépasse pas 120°C jusqu'à la formation d'une solution limpide contenant les éléments précurseurs des entités zéolithiques, lesquelles constituent exclusivement les parois cristallisées de la matrice de chacune des particules sphériques du matériau présent dans le catalyseur <u>préparé</u> selon l'invention. Selon un mode opératoire préféré, le mélange réactionnel renfermant au moins un agent structurant, au moins un précurseur silicique et au moins un précurseur d'au moins un élément X, X étant avantageusement l'aluminium est mûri à température ambiante, pendant une durée avantageusement comprise entre 15 et 20 heures, de façon à obtenir une solution limpide contenant les éléments précurseurs d'entités zéolithiques susceptibles de générer la formation d'entités zéolithiques cristallisées au cours de l'étape e) d'autoclavage dudit premier procédé de préparation du matériau présent dans le <u>catalyseur préparé selon l'invention</u>. La solution limpide contenant des précurseurs d'entités zéolithiques selon l'étape b') de la deuxième variante dudit deuxième procédé de préparation du matériau présent dans le catalyseur <u>préparé</u> selon l'invention et celle selon l'étape b") dudit troisième procédé de préparation du matériau présent dans le catalyseur <u>préparé</u> selon l'invention sont avantageusement préparées de la même manière que ladite solution limpide contenant des précurseurs d'entités zéolithiques selon l'étape a) dudit premier procédé de préparation du matériau présent dans le catalyseur <u>préparé</u> selon l'invention.

Conformément à l'étape a') du deuxième procédé du matériau présent dans le catalyseur <u>préparé</u> selon l'invention, le mélange réactionnel est mis sous conditions hydrothermales sous une pression autogène, éventuellement en ajoutant du gaz, par exemple de l'azote, à une température comprise entre 50 et 200°C, de préférence entre 60 et 170°C et de manière encore préférentielle à une température comprise entre 60 et 120°C jusqu'à la formation de nanocristaux zéolithiques de taille nanométrique maximale égale à 60 nm. De manière préférée, le mélange réactionnel est mûri à une température comprise entre 70°C et 100°C pendant une durée comprise entre 3 et 6 jours. A l'issue dudit traitement hydrothermal, on obtient une solution colloïdale dans laquelle lesdits nanocristaux se trouvent à l'état dispersé. La synthèse desdits nanocristaux zéolithiques est suivie par diffraction des rayons X aux grands angles et la taille desdits nanocristaux est contrôlée par diffusion de la lumière et par Microscopie Électronique à Transmission. L'Homme du métier saura ajuster les conditions opératoires de manière à obtenir ladite solution colloïdale dans laquelle lesdits nanocristaux, de taille nanométrique maximale égale à 60 nm, se trouvent à l'état dispersé.

Il est préféré de travailler dans un milieu réactionnel basique au cours des diverses étapes des premier et deuxième procédés de préparation du matériau présent dans le catalyseur <u>préparé</u> selon l'invention afin de favoriser le développement des entités zéolithiques constituant les parois cristallisées de la matrice de chacune des particules du matériau présent dans le catalyseur <u>préparé</u> selon l'invention. La basicité de la solution limpide selon l'étape a) dudit premier procédé de préparation ou de la solution colloïdale selon l'étape a') dudit deuxième procédé de préparation ou de la solution limpide selon l'étape b') de la deuxième variante dudit deuxième procédé de préparation du matériau présent dans le <u>catalyseur préparé selon l'invention</u> est assurée par la basicité de l'agent structurant employé ou bien par basification du mélange réactionnel par l'ajout d'un composé basique, <u>choisi parmi les</u> hydroxyde<u>s</u> de métal alcalin, de préférence de l'hydroxyde de sodium, dans l'étape a), a') ou b').

Conformément à l'étape a") du troisième procédé de préparation du matériau présent dans le catalyseur <u>préparé</u> selon l'invention, on utilise des cristaux zéolithiques. Lesdits cristaux zéolithiques peuvent avoir une taille allant au delà de 60 nm. Toute zéolithe cristallisée ou tout solide apparenté développant des propriétés d'acidité connu dans l'état de la technique qui a la propriété de se disperser en solution, par exemple en solution aquo-organique, sous la forme de nanocristaux de taille nanométrique maximale égale à 60 nm convient pour la mise en oeuvre de l'étape a"). La dispersion desdits cristaux zéolithiques est réalisée par toute méthode connue de l'Homme du métier, par exemple par sonication. Lesdits cristaux zéolithiques sont synthétisés par des méthodes connues de l'Homme du métier. Les cristaux zéolithiques utilisés dans l'étape a") peuvent être déjà sous la forme de nanocristaux. L'obtention de cristaux zéolithiques se dispersant sous la forme de nanocristaux de taille nanométrique maximale égale à 60 nm est également possible en réalisant une fonctionnalisation de la surface des nanocristaux. Les cristaux zéolithiques utilisés se trouvent soit sous leur forme brute de synthèse, c'est-à-dire contenant encore l'agent structurant, soit sous leur forme calcinée, c'est-à-dire débarrassés dudit agent structurant. Lorsque les cristaux zéolithiques utilisés sont sous leur forme brute de synthèse, ledit agent structurant est éliminé au cours de l'étape g") du troisième procédé de préparation du matériau présent dans le catalyseur <u>préparé</u> selon l'invention.

Conformément à l'étape b), l'étape b') et l'étape b") respectivement du premier, deuxième et troisième procédé de préparation du matériau présent dans le catalyseur <u>préparé</u> selon l'invention, le tensioactif utilisé est un tensioactif ionique ou non ionique ou un mélange des deux, de préférence le tensioactif utilisé est un tensioactif non ionique. De préférence, le tensioactif ionique est choisi parmi des tensioactifs anioniques tels que les sulfates comme par exemple le dodécylsulfate de sodium (SDS). De préférence, le tensioactif non ionique peut être tout copolymère possédant au moins deux parties de polarités différentes leur conférant des propriétés de macromolécules amphiphiles. Ces copoly-

12

mères peuvent comporter au moins un bloc faisant partie de la liste non exhaustive des familles de polymères suivantes : les polymères fluorés (-[$CH_2$-$CH_2$-$CH_2$-$CH_2$-O-CO-R1- avec R1 = $C_4F_9$, $C_8F_{17}$, etc.), les polymères biologiques comme les polyacides aminés (poly-lysine, alginates, etc.), les dendrimères, les polymères constitués de chaînes de poly(oxyde d'alkylène). Tout autre copolymère à caractère amphiphile connu de l'Homme du métier peut être utilisé s'il permet d'obtenir une solution stable, c'est-à-dire limpide ou colloïdale, dans les étapes b), b') et b") respectivement des premier, deuxième et troisième procédés de préparation du matériau présent dans le catalyseur <u>préparé</u> selon l'invention, comme le poly(styrene-b-acrylamide) par exemple (S. Förster, M. Antionnetti, *Adv. Mater,* 1998, 10, 195 ; S. Förster, T. Plantenberg, *Angew. Chem. Int. Ed,* 2002, 41, 688 ; H. Cölfen, *Macromol. Rapid Commun,* 2001, 22, 219). De manière préférée, on utilise dans le cadre de la présente invention un copolymère bloc constitué de chaînes de poly(oxyde d'alkylène). Ledit copolymère bloc est de préférence un copolymère bloc ayant deux, trois ou quatre blocs, chaque bloc étant constitué d'une chaîne de poly(oxyde d'alkylène). Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe. Pour un copolymère à trois blocs, l'un au moins des blocs est constitué d'une chaîne de poly(oxyde d'alkylène) de nature hydrophile tandis que l'un au moins des autres blocs est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées $(PEO)_x$ et $(PEO)_z$ et les chaînes de poly(oxyde d'alkylène) de nature hydrophobe sont des chaînes de poly(oxyde de propylène) notées $(PPO)_y$, des chaînes de poly(oxyde de butylène), ou des chaînes mixtes dont chaque chaîne est un mélange de plusieurs monomères d'oxyde d'alkylène. De manière très préférée, dans le cas d'un copolymère à trois blocs, celui-ci est constitué de deux chaînes de poly(oxyde d'éthylène) et d'une chaîne de poly(oxyde de propylène). Plus précisément, on utilise un composé de formule $(PEO)_x$-$(PPO)_y$-$(PEO)_z$ où x est compris entre 5 et 300 et y est compris entre 33 et 300 et z est compris entre 5 et 300. De préférence, les valeurs de x et z sont identiques. On utilise très avantageusement un composé dans lequel x = 20, y = 70 et z = 20 (P123) et un composé dans lequel x = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques dans les étapes b), b') et b") respectivement des premier, deuxième et troisième procédés de préparation du matériau présent dans le catalyseur <u>préparé</u> selon l'invention. Pour un copolymère à quatre blocs, deux des blocs sont constitués d'une chaîne de poly(oxyde d'alkylène) de nature hydrophile et les deux autres blocs sont constitués d'une chaîne de poly(oxyde d'alkylène) de nature hydrophobe.

La solution obtenue à l'issue des étapes b), b') et b") respectivement des premier, deuxième et troisième procédés de préparation du matériau présent dans le <u>catalyseur préparé selon l'invention</u> peut être acide, neutre ou basique. Ladite solution est basique et présente un pH supérieur à 9, cette valeur du pH étant imposée par le pH de la solution limpide contenant les éléments précurseurs d'entités zéolithiques conformément à l'étape a) du premier procédé de préparation <u>selon l'invention</u> du matériau présent dans le catalyseur ou bien de la solution colloïdale contenant des nanocristaux zéolithiques de taille nanométrique maximale égale à 60 nm selon l'étape a') et a") respectivement dudit deuxième et troisième procédés de préparation <u>selon l'invention</u> du matériau présent dans le catalyseur . La solution obtenue à l'issue des étapes b), b') et b") peut être aqueuse ou peut être un mélange eau-solvant organique, le solvant organique étant préférentiellement un solvant polaire, notamment un alcool, préférentiellement de l'éthanol.

La quantité en composés organiques, c'est à dire en tensioactif et en agent structurant, présente dans le mélange conformément aux étapes b), b') et b") respectivement des premier, deuxième et troisième procédés de préparation du matériau présent dans le catalyseur <u>préparé</u> selon l'invention, est définie par rapport à la quantité de matière inorganique présente dans ledit mélange à la suite de l'ajout de la solution limpide contenant les éléments précurseurs d'entités zéolithiques conformément à l'étape a) du premier procédé de préparation du matériau présent dans le catalyseur <u>préparé</u> selon l'invention ou bien à la suite de l'ajout de la solution colloïdale contenant des nanocristaux zéolithiques de taille nanométrique maximale égale à 60 nm selon l'étape a') du deuxième procédé de préparation du matériau présent dans le catalyseur <u>préparé</u> selon l'invention et éventuellement de l'ajout de la solution limpide selon l'étape b') si le matériau présent dans le catalyseur préparé selon l'invention est préparé selon la deuxième variante dudit deuxième procédé de préparation ou bien encore à la suite de l'ajout de la solution colloïdale contenant des nanocristaux zéolithiques de taille nanométrique maximale égale à 60 nm selon l'étape a") et de la solution limpide introduite à l'étape b") du troisième procédé de préparation du matériau présent dans le catalyseur préparé selon l'invention. La quantité de matière inorganique correspond à la quantité de matière du précurseur silicique et à celle du précurseur de l'élément X lorsqu'il est présent. Le rapport volumique $V_{inorganique}/V_{organique}$ est tel que le système binaire organique-inorganique formé lors des étapes d'atomisation c), c') et c") respectivement des premier, deuxième et troisième procédés de préparation du matériau présent dans le catalyseur préparé selon l'invention subisse un processus de mésostructuration par auto-assemblage du tensioactif conjointement aux réactions d'hydrolyse/condensation des divers précurseurs inorganiques. Ledit rapport volumique $V_{inorganique}/V_{organique}$ est défini comme suit : $V_{inorganique}/V_{organique} = (m_{inorg} * \rho_{org}) / (m_{org} * \rho_{inorg})$ où $m_{inorg}$ est la masse finale de la fraction inorganique sous forme d'oxyde(s) condensé(s) dans la particule élémentaire solide obtenue par atomisation, $m_{org}$ est la masse totale de la fraction organique non volatile se retrouvant dans la particule élémentaire solide obtenue par atomisation, $\rho_{org}$ et $\rho_{inorg}$ sont les densités respectivement associées aux fractions organique non volatile et inorganique. Dans le cadre de l'invention, lorsque l'élément X est l'aluminium et pour une simplification des calculs (approximations valables pour une grande majorité de fraction organique non volatile et pour une fraction inorganique du type "réseau aluminosilicate"), on considère que $\rho_{org} = 1$ et $\rho_{inorg} = 2$. Dans le cadre de l'invention, $m_{inorg}$ correspond généralement à la masse de $SiO_2$ additionnée de celle de la masse de $AlO_2$, lorsque X est l'aluminium, et $m_{org}$ correspond à la masse de l'agent structurant, par exemple TPAOH, additionnée de la masse du tensioactif, par exemple le tensioactif F127. Le solvant polaire préférentiellement l'éthanol, ainsi que l'eau et la soude, n'entrent pas en compte dans le calcul dudit rapport $V_{inorganique}/V_{organique}$. Les espèces comprenant un élément X, avantageusement les espèces aluminiques, introduites après la mise en oeuvre de ladite étape b), b') ou b") respectivement du premier, deuxième ou troisième procédé de préparation du matériau présent dans le catalyseur ne sont pas prises en compte pour le calcul du rapport volumique $V_{inorganique}/V_{organique}$ défini ci-dessus. Conformément à l'invention, la quantité de matière organique et la quantité de matière inorganique dans le mélange obtenu après la mise en oeuvre de l'étape b), b') et b") respectivement du premier, deuxième et troisième procédés de préparation du matériau présent dans le catalyseur préparé selon l'invention est tel que le rapport $V_{inorganique}/V_{organique}$ est compris dans une gamme de 0,26 à 4, de façon préférée dans une gamme de 0,3 à 2. Conformément aux étapes b), b') et b") respectivement des premier, deuxième et troisième procédés de préparation du matériau présent dans le catalyseur préparé selon l'invention, la concentration initiale en tensioactif, introduit dans le mélange, définie par $c_0$ est telle que $c_0$ est inférieure ou égale à $c_{mc}$, le paramètre $c_{mc}$ représentant la concentration micellaire critique bien connue de l'Homme du métier, c'est-à-dire la concentration limite au-delà de laquelle se produit le phénomène d'auto-arrangement des molécules du tensioactif dans la solution obtenue à l'issue des étapes b), b') et b") respectivement des premier, deuxième et troisième procédés de préparation du matériau présent dans le catalyseur préparé selon l'invention. Avant atomisation, la concentration en molécules de tensioactif de la solution obtenue à l'issue des étapes b), b') et b") respectivement des premier, deuxième et troisième procédés de préparation du matériau présent dans le catalyseur préparé selon l'invention ne conduit donc pas à la formation de phases micellaires particulières. Dans une mise en oeuvre préférée des différents procédés de préparation selon l'invention, la concentration $c_0$ est inférieure à la $c_{mc}$, le rapport $V_{inorganique}/V_{organique}$ est tel que la composition du système binaire vérifie les conditions de composition pour lesquelles un mécanisme de mésostructuration se produit par auto-assemblage coopératif des réactifs ($V_{inorganique}/V_{organique}$ compris entre 0,26 et 4, de préférence entre 0,3 et 2) et ladite solution visée aux étapes b), b') et b") respectivement des premier, deuxième et troisième procédés de préparation du matériau présent dans le catalyseur préparé selon l'invention est un mélange eau basique-alcool.

L'étape d'atomisation du mélange selon les étapes c), c') et c") respectivement des premier, deuxième et troisième procédés de préparation du matériau présent dans le catalyseur préparé selon l'invention produit des gouttelettes sphériques. La distribution en taille de ces gouttelettes suit une loi lognormale. Le générateur d'aérosol utilisé ici est un appareil commercial de modèle 9306 A fourni par TSI ayant un atomiseur 6 jets. L'atomisation de la solution se fait dans une chambre dans laquelle est envoyé un gaz vecteur, un mélange $O_2/N_2$ (air sec), sous une pression P égale à 1,5 bars.

Conformément aux étapes d), d') et d") respectivement des premier, deuxième et troisième procédés de préparation du matériau présent dans le catalyseur préparé selon l'invention, on procède au séchage desdites gouttelettes. Ce séchage est réalisé par le transport desdites gouttelettes via le gaz vecteur, le mélange $O_2/N_2$, dans des tubes en PVC, ce qui conduit à l'évaporation progressive de la solution, par exemple de la solution aquo-organique, préférentiellement de la solution aquo-organique basique, obtenue au cours des étapes b), b') et b") respectivement des premier, deuxième et troisième procédés de préparation du matériau présent dans le catalyseur préparé selon l'invention, et ainsi à l'obtention de particules élémentaires sphériques. Ce séchage est parfait par un passage desdites particules dans un four dont la température peut être ajustée entre 50 à 600°C et de préférence de 80 à 400°C, le temps de résidence de ces particules dans le four étant de l'ordre de la seconde. Les particules sont alors récoltées sur un filtre. Une pompe placée en fin de circuit favorise l'acheminement des espèces dans le dispositif expérimental aérosol. Le séchage des gouttelettes selon les étapes d), d') et d") respectivement des premier, deuxième et troisième procédés de préparation du matériau présent dans le catalyseur préparé selon l'invention est avantageusement suivi d'un passage à l'étuve à une température comprise entre 50 et 150°C.

Conformément aux étapes e), e') et e") des premier procédé, variante(s) du deuxième procédé et troisième procédés de préparation du matériau présent dans le catalyseur préparé selon l'invention, on procède à un autoclavage des particules séchées obtenues à l'issue des étapes d), d') et d") des trois différents procédés de préparation du matériau présent dans le catalyseur préparé selon l'invention en présence d'un solvant. Cette étape consiste à placer lesdites particules dans une enceinte fermée en présence d'un solvant à une température donnée de façon à travailler en pression autogène inhérente aux conditions opératoires choisies. Le solvant utilisé est avantageusement un solvant polaire protique. De préférence le solvant utilisé est de l'eau. Le volume de solvant introduit est défini par rapport au volume de l'autoclave choisi, de la masse de poudre sèche introduite et de la température de traitement. Ainsi le volume de solvant introduit est compris dans une gamme de 0,01 à 20% par rapport au volume de l'autoclave choisi, de préférence dans une gamme de 0,05 à 5% et de façon plus préférée dans une gamme de 0,05 à 1%. La température d'autoclavage est comprise entre 50 et 200°C, de préférence comprise entre 60 et 170°C et de manière encore préférentielle compri se entre 60 et 120°C de façon à permettre la croissance d'entités zéolithiques dans les parois de la matrice de chacune des particules du matériau présent dans le catalyseur préparé selon l'invention sans générer de cristaux de zéolithe de taille trop importante qui désorganiseraient la mésostructuration de chaque particule du matériau présent dans le catalyseur préparé selon l'invention. L'autoclavage est maintenu sur une période de 1 à 196 heures et de préférence sur une période de 10 à 72 heures.

Conformément aux étapes f), f) et f" respectivement des premier procédé, variante(s) du deuxième procédé et troisième procédés de préparation du matériau présent dans le catalyseur préparé selon l'invention, le séchage des particules après autoclavage est réalisé par une mise à l'étuve à une température comprise entre 50 et 150°C.

Dans le cas où l'élément X est avantageusement l'aluminium et où l'élément sodium est présent dans la solution obtenue conformément aux étapes a), a'), b') et b") respectivement des premier, deuxième, deuxième variante du deuxième et troisième procédés de préparation du matériau présent dans le catalyseur préparé selon l'invention via l'emploi de l'hydroxyde de sodium et/ou d'un agent structurant sodé assurant la basicité de ladite solution ou bien présent dans les cristaux de zéolithes précurseurs de l'étape a") du troisième procédé de préparation du matériau présent dans le catalyseur préparé selon l'invention, il est préféré de réaliser une étape supplémentaire d'échange ionique permettant d'échanger le cation Na⁺ par le cation NH₄⁺ entre les étapes f) et g) si le matériau présent dans le catalyseur préparé selon l'invention est préparé selon ledit premier procédé de préparation, entre les étapes f) et g') si le matériau présent dans le catalyseur préparé selon l'invention est préparé selon le deuxième procédé de préparation, entre les étapes f) et g') si le matériau présent dans le catalyseur préparé selon l'invention est préparé selon l'une des variante(s) dudit deuxième procédé de préparation, entre les étapes f") et g") si le matériau présent dans le catalyseur préparé selon l'invention est préparé selon ledit troisième procédé de préparation. Cet échange, qui conduit à la formation de protons H⁺ après les étapes g), g') et g") respectivement des premier, deuxième et troisième procédés de préparation du matériau présent dans le catalyseur préparé selon l'invention dans le cas préféré où l'élimination de l'agent structurant et du tensioactif est réalisée par calcination sous air, est réalisé selon des protocoles opératoires bien connus de l'Homme du métier. Une des méthodes usuelles consiste à mettre en suspension les particules solides séchées issues des étapes f), d') et f") respectivement des premier, deuxième et troisième procédés de préparation du matériau présent dans le catalyseur préparé selon l'invention et de l'étape f) de l'une des variantes du deuxième procédé de préparation du matériau présent dans le catalyseur préparé selon l'invention si elle est pratiquée, dans une solution aqueuse de nitrate d'ammonium. L'ensemble est ensuite porté à reflux pendant une durée de 1 à 6 heures. Les particules sont alors récupérées par filtration (centrifugation 9000 tr/min), lavées puis séchées par passage à l'étuve à une température comprise entre 50 et 150°C. Ce cycle d'échange ionique/lavage/séchage peut être reconduit plusieurs fois et de préférence deux autres fois. Ce cycle d'échange peut être également réalisé après les étapes f) et g) dudit premier procédé de préparation, après les étapes d') et g') dudit deuxième procédé de préparation, après les étapes f) et g') de l'une des variantes dudit deuxième procédé de préparation et après les étapes f") et g") dudit troisième procédé de préparation. Dans ces conditions, l'étape g), g') et g") respectivement du premier, deuxième et troisième procédés de préparation du matériau présent dans le catalyseur préparé selon l'invention est alors reproduite après le dernier cycle d'échange de façon à générer les protons H⁺ comme explicité ci-dessus.

Conformément aux étapes g), g') et g") respectivement des premier, deuxième et troisième procédés de préparation du matériau présent dans le catalyseur préparé selon l'invention, l'élimination de l'agent structurant et du tensioactif, afin d'obtenir le matériau cristallisé selon l'invention à porosité hiérarchisée et organisée dans les domaines de la microporosité et de la mésoporosité, est avantageusement réalisée par des procédés d'extraction chimique ou par traitement thermique et de préférence par calcination sous air dans une gamme de température de 300 à 1000°C et plus précisément dans une gamme de 400 à 600°C pendant une durée de 1 à 24 heures et de façon préférée pendant une durée de 2 à 12 heures.

Dans le cas où la solution visée aux étapes b), b') et b") respectivement des premier, deuxième et troisième procédés de préparation du matériau présent dans le catalyseur préparé selon l'invention, est un mélange eau-solvant organique, basique, il est essentiel au cours desdites étapes b), b') et b") que la concentration en tensioactif à l'origine de la mésostructuration de la matrice soit inférieure à la concentration micellaire critique et que le rapport $V_{inorganique}/V_{organique}$ soit compris entre 0,26 et 4, de préférence entre 0,3 et 2 de sorte que l'évaporation de ladite solution aquo-organique, préférentiellement basique, au cours des étapes c), c') et c") respectivement des premier, deuxième et troisième procédés de préparation du matériau présent dans le catalyseur préparé selon l'invention par la technique d'aérosol induise un phénomène de micellisation ou d'auto-assemblage conduisant à la mésostructuration de la matrice du matériau présent dans le catalyseur préparé selon l'invention. Lorsque $c_0 < c_{mc}$, la mésostructuration de la matrice du matériau présent dans le catalyseur préparé selon l'invention est consécutive à une concentration progressive, au sein de chaque gouttelette, des éléments précurseurs d'entités zéolithiques de la solution limpide obtenue à l'étape a) du premier procédé de préparation du matériau présent dans le catalyseur préparé selon l'invention ou bien des nanocristaux zéolithiques de la solution colloïdale obtenue à l'étape a') dudit deuxième procédé de préparation, ou bien des nanocristaux zéolithiques de la solution colloïdale obtenue à l'étape a') et des éléments précurseurs d'entités zéolithiques de la solution limpide obtenue à l'étape b') de la deuxième variante dudit deuxième procédé de préparation ou bien encore des nanocristaux zéolithiques de la solution colloïdale obtenue à l'étape a") et des éléments précurseurs d'entités zéolithiques de la solution limpide obtenue à l'étape b") dudit troisième procédé de préparation et d'au moins un tensioactif introduit lors des étapes b), b') et b") des trois procédés de préparation du matériau présent dans le catalyseur préparé selon l'invention, jusqu'à une concentration en tensioactif c > c$_{mc}$ résultant d'une évaporation de la solution aquo-organique.

Selon un premier mode de réalisation préférée de chacun des trois procédés de préparation du matériau présent dans le catalyseur préparé selon l'invention, au moins un précurseur d'au moins un élément X, X étant avantageusement l'aluminium, est introduit pour la mise en oeuvre de l'étape b) du premier procédé de préparation du matériau présent dans le catalyseur préparé selon l'invention, de l'étape b') du deuxième procédé de préparation du matériau présent dans le catalyseur préparé selon l'invention, de l'étape b') de l'une des variantes dudit deuxième procédé de préparation du matériau présent dans le catalyseur préparé selon l'invention ou de l'étape b") dudit troisième procédé de préparation du matériau présent dans le catalyseur préparé selon l'invention. Ainsi, le mélange en solution d'au moins un tensioactif et d'au moins ladite solution limpide obtenue selon l'étape a) du premier procédé de préparation du matériau présent dans le catalyseur préparé selon l'invention, ou d'au moins un tensioactif et d'au moins ladite solution colloïdale obtenue selon l'étape a') du deuxième procédé de préparation du matériau présent dans le catalyseur préparé selon l'invention, ou d'au moins un tensioactif, d'au moins ladite solution colloïdale obtenue selon l'étape a') et d'au moins ladite solution limpide obtenue selon l'étape b') de la deuxième variante dudit deuxième procédé de préparation, ou encore d'au moins un tensioactif, d'au moins ladite solution colloïdale obtenue selon l'étape a") et d'au moins ladite solution limpide obtenue selon l'étape b") dudit troisième procédé de préparation est réalisé en présence d'au moins un précurseur dudit élément X, X étant avantageusement l'aluminium, de préférence parmi les précurseurs aluminiques, décrits plus haut dans la présente description, par exemple pour la mise en oeuvre de ladite étape a) dudit premier procédé de préparation du matériau présent dans le catalyseur préparé selon l'invention. Conformément audit premier mode de réalisation préférée de chacun des trois procédés de préparation du matériau présent dans le catalyseur préparé selon l'invention, la préparation de la solution limpide selon l'étape a), l'étape b') ou l'étape b") respectivement du premier procédé, deuxième variante du deuxième procédé ou troisième procédé de préparation du matériau présent dans le catalyseur préparé selon l'invention et celle de la solution colloïdale selon l'étape a') dudit deuxième procédé de préparation est réalisée soit en présence soit en l'absence d'au moins un précurseur d'au moins un élément X.

Selon un deuxième mode de réalisation préférée de chacun des trois procédés de préparation du matériau présent dans le catalyseur préparé selon l'invention, au moins un précurseur d'au moins un élément X, X étant avantageusement l'aluminium, est introduit soit au cours de la mise en oeuvre de ladite étape d) et/ou de ladite étape f) et/ou de ladite g) dudit premier procédé de préparation du matériau présent dans le catalyseur préparé selon l'invention, soit au cours de la mise en oeuvre de ladite étape d') et/ou de ladite étape g') dudit deuxième procédé de préparation du matériau présent dans le catalyseur préparé selon l'invention, soit au cours de la mise en oeuvre de ladite étape d') et/ou de ladite étape f) et/ou de ladite étape g') de l'une des variantes dudit deuxième procédé de préparation soit encore au cours de la mise en oeuvre de ladite étape d") et/ou de ladite étape f") et/ou de ladite étape g") dudit troisième procédé de préparation, en vue de produire une modification de surface du matériau présent dans le catalyseur préparé selon l'invention. Conformément audit deuxième mode de réalisation préférée de chacun des trois procédés de préparation du matériau présent dans le catalyseur préparé selon l'invention, ledit précurseur d'au moins un élément X, X étant avantageusement l'aluminium, est introduit au cours de la mise en oeuvre d'au moins l'une des étapes citées ci-dessus (d, d', d", f, f, f', g, g' et g") par toute technique de modification de surface bien connue de l'Homme du métier telle que le greffage d'au moins un précurseur d'au moins un élément X, l'imprégnation à sec d'au moins un précurseur d'au moins un élément X et l'imprégnation en excès d'au moins un précurseur d'au moins un élément X. Ledit précurseur d'au moins un élément X, avantageusement un précurseur aluminique, introduit au cours de la mise en oeuvre d'au moins l'une des étapes citées ci-dessus (d, d', d", f, f, f', g, g' et g") par une technique de modification de surface, est choisi parmi les précurseurs dudit élément X, avantageusement parmi les précurseurs aluminiques, décrits plus haut dans la présente description, par exemple ceux utilisés pour la mise en oeuvre de ladite étape a) dudit premier procédé de préparation du matériau présent dans le catalyseur préparé selon l'invention. Conformément audit deuxième mode de réalisation préférée de chacun des trois procédés de préparation du matériau présent dans le catalyseur préparé selon l'invention, l'étape a) et l'étape a') du premier et du deuxième procédés de préparation de l'invention est réalisée en présence ou en l'absence d'au moins un précurseur d'au moins un élément X, avantageusement un précurseur aluminique, et l'étape b), l'étape b') ou l'étape b") respectivement du premier, deuxième ou troisième procédé de préparation du matériau présent dans le catalyseur préparé selon l'invention est réalisée en présence ou en l'absence d'au moins un précurseur d'au moins un élément X, avantageusement un précurseur aluminique.

Conformément aux trois procédés de préparation du matériau présent dans le catalyseur préparé selon l'invention, ledit premier mode de réalisation préférée de chacun des trois procédés de préparation du matériau présent dans le catalyseur préparé selon l'invention et ledit deuxième mode de réalisation préférée de chacun des trois procédés

**EP 2 296 808 B1**

de préparation du matériau présent dans le catalyseur préparé selon l'invention ne sont que des variantes facultatives de chacun des trois procédés de préparation du matériau présent dans le catalyseur préparé selon l'invention. Aussi, l'élément X, avantageusement de l'aluminium, est introduit, quand le matériau est préparé selon le premier procédé de préparation du matériau présent dans le catalyseur préparé selon l'invention, soit au cours de ladite étape a) du premier procédé de préparation du matériau présent dans le catalyseur préparé selon l'invention pour la préparation de ladite solution limpide, soit au cours de ladite étape b) conformément audit premier mode de réalisation préférée du premier procédé de préparation du matériau présent dans le catalyseur préparé selon l'invention soit encore au cours de ladite étape d) et/ou de ladite étape f) et/ou de ladite étape g) conformément audit deuxième mode de réalisation préférée du premier procédé de préparation du matériau présent dans le catalyseur préparé selon l'invention. Lorsque le matériau est préparé selon ledit deuxième procédé de préparation du matériau présent dans le catalyseur préparé selon l'invention, ledit élément X, avantageusement l'aluminium, est introduit soit au cours de ladite étape a'), soit au cours de ladite étape b') conformément audit premier mode de réalisation préférée du deuxième procédé de préparation du matériau présent dans le catalyseur préparé selon l'invention soit encore au cours de ladite étape d') et/ou de ladite étape f) et/ou de l'étape g') conformément audit deuxième mode de réalisation préférée. Lorsque le matériau est préparé selon ladite deuxième variante dudit deuxième procédé de préparation du matériau présent dans le catalyseur préparé selon l'invention, ledit élément X, avantageusement l'aluminium, est introduit soit au cours de ladite étape a'), soit au cours de l'étape b') pour la préparation de ladite solution limpide, soit au cours ladite étape b') conformément audit premier mode de réalisation préférée soit encore au cours de ladite étape d') et/ou de l'étape f) et/ou de l'étape g') conformément audit deuxième mode de réalisation préférée. Lorsque le matériau est préparé selon ledit troisième procédé de préparation du matériau présent dans le catalyseur préparé selon l'invention, l'élément X, avantageusement l'aluminium, est introduit soit au cours de ladite étape b") pour la préparation de ladite solution limpide, soit au cours ladite étape b") conformément audit premier mode de réalisation préférée soit encore au cours de ladite d") et/ou de l'étape f) et/ou de l'étape g") conformément audit deuxième mode de réalisation préférée. L'élément X, avantageusement l'aluminium, peut également être introduit, plusieurs fois, au cours de la mise en oeuvre de plusieurs étapes selon toutes les combinaisons possibles des modes de réalisation décrits ci-dessus. En particulier, il est avantageux d'introduire l'aluminium au cours de ladite étape a) et de ladite étape b) ou au cours de ladite étape a) et de ladite étape d) et/ou de ladite étape e) lorsque le matériau présent dans le catalyseur préparé selon l'invention est préparé selon ledit premier procédé de préparation du matériau présent dans le catalyseur préparé selon l'invention.

Dans le cas où l'élément X est avantageusement l'aluminium, l'aluminosilicate cristallisé, obtenu selon l'un des trois procédés de préparation du matériau présent dans le catalyseur préparé selon l'invention, présente alors un rapport molaire Si/Al défini à partir de la quantité en élément silicium introduite lors des étapes a), a'), a"), b') et b") respectivement des premier, deuxième, troisième, deuxième variante du deuxième et troisième procédés de préparation du matériau présent dans le catalyseur préparé selon l'invention et la quantité totale en élément aluminium introduite dans la ou les étape(s) de l'un des trois procédés de préparation selon les différents modes de réalisation préférés décrits ci-dessus. Dans ces conditions et de manière préférée, la gamme du rapport molaire Si/Al du matériau cristallisé selon l'invention est comprise entre 0,5 et 1000.

Lorsque ledit premier mode de réalisation préféré de chacun des trois procédés de préparation du matériau présent dans le catalyseur préparé selon l'invention est appliqué, les quantités de matière organique et inorganique à introduire pour la mise en oeuvre de l'étape b), l'étape b') ou l'étape b") sont à ajuster en fonction de la quantité de matière supplémentaire en élément X, avantageusement en aluminium, introduite dans ladite étape b), b') ou b") selon ledit premier mode de manière à ce que la quantité totale de matière organique et inorganique introduite pour la préparation du matériau selon l'invention permette un phénomène de micellisation conduisant à la mésostructuration de la matrice de chaque particule dudit matériau. L'élément X, avantageusement l'aluminium, introduit pour la mise en oeuvre dudit deuxième mode de réalisation préférée de chacun des trois procédés de préparation du matériau présent dans le catalyseur préparé selon l'invention n'intervient pas dans le calcul du rapport $V_{iorganique}/V_{organique}$ tel que défini plus haut dans la présente description dès lors qu'il est introduit après l'étape permettant un phénomène de micellisation conduisant à la mésostructuration de la matrice de chaque particule dudit matériau présent dans le catalyseur préparé selon l'invention.

On précise que dans tout le texte de la description de la présente invention, l'expression "deuxième procédé de préparation du matériau présent dans le catalyseur préparé selon l'invention" s'appliquent aussi bien au cas où le matériau présent dans le catalyseur préparé selon l'invention est préparé selon le deuxième procédé de préparation du matériau présent dans le catalyseur préparé selon l'invention (sans application d'aucune des deux variantes), au cas où le matériau selon l'invention est préparé selon la première variante dudit deuxième procédé de préparation du matériau présent dans le catalyseur préparé selon l'invention ainsi qu'au cas où le matériau présent dans le catalyseur préparé selon l'invention est préparé selon la deuxième variante dudit deuxième procédé de préparation du matériau présent dans le catalyseur préparé selon l'invention.

Le matériau cristallisé à porosité hiérarchisée et organisée dans les domaines de la microporosité et de la mésoporosité constitutif du catalyseur préparé selon la présente invention peut être obtenu sous forme de poudre, de billes, de pastilles, de granulés, ou d'extrudés, les opérations de mises en forme étant réalisées par les techniques classiques connues de l'Homme du métier. De préférence, le matériau cristallin à porosité hiérarchisée et organisée dans les domaines de la microporosité et de la mésoporosité présent dans le catalyseur préparé selon l'invention est obtenu sous forme de poudre, laquelle est constituée de particules sphériques élémentaires ayant un diamètre maximal de 200 µm, ce qui facilite la diffusion éventuelle des réactifs lors de l'emploi du matériau comme élément constitutif du catalyseur préparé selon l'invention dans des procédés d'hydrocraquage, d'hydroconversion et d'hydrotraitement.

Il est à noter que les étapes g) du premier procédé de préparation du matériau présent dans le catalyseur préparé selon l'invention, g') du deuxième procédé de préparation du matériau présent dans le catalyseur préparé selon l'invention et g") du troisième procédé de préparation du matériau présent dans le catalyseur préparé selon l'invention peuvent être réalisées avant ou après toute étape de mise en forme décrite ci-dessus dudit matériau cristallin à porosité hiérarchisée et organisée et comprenant du silicium, de même qu'à toute étape de préparation du catalyseur préparé selon l'invention décrite ci-dessous.

Le catalyseur est préparé selon un procédé comprenant le mélange dudit matériau cristallin à porosité hiérarchisée et organisée avec au moins une phase active contenant au moins un élément hydro-déshydrogénant du groupe VIB et/ou VIII.

Le matériau cristallin à porosité hiérarchisée et organisée présent dans le catalyseur préparé selon l'invention est calciné au cours de la préparation dudit catalyseur, avantageusement préalablement au mélange avec ladite phase active. Le traitement de calcination est habituellement effectué sous air à une température d'au moins 150°C, de préférence au moins 300°C, de manière plus préférée entre environ 350 et 1000°C et de façon encore plus préférée entre 350 et 800°C. Dans la suite du texte, ledit matériau cristallin à porosité hiérarchisée et organisée, éventuellement mis en forme et ayant éventuellement subi un traitement thermique sera dénommé "support" du catalyseur préparé selon l'invention.

Les éléments du groupes VIB et/ou les éléments du groupe VIII et éventuellement ceux choisis parmi le phosphore, le bore, le silicium et éventuellement les éléments des groupes VB et VIIB peuvent être éventuellement introduits, tout ou partie, avant, pendant ou après la mise en forme dudit matériau cristallin à porosité hiérarchisée et organisée par toute méthode connue de l'Homme du métier. Lesdits éléments peuvent être introduits après la mise en forme dudit matériau cristallin à porosité hiérarchisée et organisée et ce après ou avant le séchage et la calcination dudit matériau mis en forme.

Selon un mode préféré dudit procédé de préparation du catalyseur préparé selon l'invention, la phase active contenant au moins un élément hydrodéshydrogénant du groupe VIB et/ou VIII, éventuellement les éléments choisis parmi le phosphore, le bore, le silicium et éventuellement les éléments des groupes VB et VIIB, peuvent être introduits au cours de la mise en forme dudit matériau cristallin à porosité hiérarchisée et organisée.

Selon un autre mode préféré du procédé de préparation du catalyseur préparé selon l'invention, la phase active contenant au moins un élément hydrodéshydrogénant du groupe VIB et/ou VIII, éventuellement les éléments choisis parmi le phosphore, le bore, le silicium et éventuellement les éléments des groupes VB et VIIB, peuvent être introduits par une ou plusieurs opérations d'imprégnation du support, par une solution contenant les précurseurs de ces éléments.

L'introduction du(des) métal(ux) est préférentiellement réalisée par imprégnation du support.

D'une façon préférée, le support est imprégné par une solution aqueuse. L'imprégnation du support est de préférence effectuée par la méthode d'imprégnation dite "à sec" bien connue de l'Homme du métier. L'imprégnation peut être effectuée en une seule étape par une solution contenant l'ensemble des éléments constitutifs du catalyseur final.

Dans le cas où le catalyseur de la présente invention contient un métal du groupe VIII et un métal du groupe VIB, les métaux du groupe VIII sont de préférence introduits par une ou plusieurs opérations d'imprégnation du support mis en forme et calciné, après ceux du groupe VIB ou en même temps que ces derniers.

Selon un autre mode préféré du procédé de préparation du catalyseur selon la présente invention, le dépôt de bore et de silicium peut aussi être réalisé de manière simultanée en utilisant par exemple une solution contenant un sel de bore et un composé du silicium de type silicone.

L'imprégnation du niobium peut être facilitée par ajout d'acide oxalique et éventuellement d'oxalate d'ammonium dans les solutions d'oxalate de niobium. D'autres composés peuvent être utilisés pour améliorer la solubilité et faciliter l'imprégnation du niobium comme il est bien connu de l'Homme du métier.

Dans le cas particulier de l'obtention finale du catalyseur préparé selon l'invention sous forme d'extrudés, il est intéressant de préparer des catalyseurs présentant des concentrations homogènes en éléments des groupes VIB et/ou en éléments du groupe VIII, et éventuellement en phosphore, en bore, en silicium et éventuellement en éléments des groupes VB, et VIIB le long de ces derniers. Il est également intéressant de préparer des catalyseurs présentant des concentrations en éléments des groupes VIB et/ou en éléments du groupe VIII, et éventuellement en phosphore, en bore, en silicium et éventuellement en éléments des groupes VB, et VIIB au coeur et en périphérie, différentes. Ces catalyseurs présentent des profils de répartition dits en "cuvette" ou en "dôme". Un autre type de répartition est celle en croûte où les éléments de la phase active sont répartis en surface. De façon générale, le rapport coeur/bord des concentrations en éléments des groupes VIB et/ou en éléments du groupe VIII, et éventuellement en phosphore, en bore, en silicium et éventuellement en éléments des groupes VB, et VIIB est compris entre 0,1 et 3. Dans une variante de l'invention, il est compris entre 0,8 et 1,2. Dans une autre variante de l'invention, il est compris entre 0,3 et 0,8.

Les métaux du groupe VIB et du groupe VIII du catalyseur de la présente invention peuvent être présents en totalité ou partiellement sous forme métallique et/ou oxyde et/ou sulfure.

Parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, le métatungstate d'ammonium, l'acide phosphomolybdique ($H_3PMo_{12}O_{40}$), l'acide phosphotungstique ($H_3PW_{12}O_{40}$) et leurs sels, l'acide silicomolybdique ($H_4SiMo_{12}O_{40}$), l'acide silicotungstique ($H_4SiW_{12}O_{40}$) et leurs sels. Les sources de molybdène et de tungstène peuvent être tout hétéropolycomposé de type Keggin, Keggin lacunaire, Dawson, Anderson, Strandberg, par exemple....On utilise de préférence les oxydes et les sels d'ammonium tels que l'heptamolybdate d'ammonium et le métatungstate d'ammonium.

Les sources d'éléments du groupe VIII qui peuvent être utilisées sont bien connues de l'Homme du métier. Par exemple, pour les métaux non nobles on utilisera les nitrates tels que le nitrate de cobalt, le nitrate de nickel, les sulfates, les hydroxydes tel que les hydroxydes de cobalt, les hydroxydes de nickel, les phosphates, les halogénures (par exemple, chlorures, bromures et fluorures), les carboxylates (par exemple acétates et carbonates). Pour les métaux nobles on utilisera les halogénures, par exemple les chlorures, les nitrates tels que le nitrate de palladium, les acides tels que l'acide chloroplatinique, les oxychlorures tels que l'oxychlorure ammoniacal de ruthénium.

La source de phosphore préférée, le phosphore étant utilisé en tant qu'élément dopant, est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tel que l'ammoniaque, les amines primaires et secondaires, les amines cycliques, les composés de la famille de la pyridine et des quinoléines et les composés de la famille du pyrrole. Les acides phosphotungstites ou phosphomolybdiques peuvent être employés.

La teneur en phosphore, le phosphore étant utilisé en tant qu'élément dopant, est ajustée, sans que cela limite la portée de l'invention, de telle manière à former un composé mixte en solution et/ou sur le support par exemple tungstène-phosphore ou molybdène-tungstène-phosphore. Ces composés mixtes peuvent être des hétéropolyanions. Ces composés peuvent être des hétéropolynanions de Keggin, par exemple.

La source de bore, le bore étant utilisé en tant qu'élément dopant, peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tel que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

De nombreuses sources de silicium, le silicium étant utilisé en tant qu'agent dopant, peuvent être employées. Ainsi, on peut utiliser le tétraéthylorthosilicate $Si(OEt)_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les sources d'élément du groupe VB qui peuvent être utilisées, sont bien connues de l'Homme du métier. Par exemple, parmi les sources de niobium, on peut utiliser les oxydes, tels que le pentaoxyde de diniobium $Nb_2O_5$, l'acide niobique $Nb_2O_5$, $H_2O$, les hydroxydes de niobium et les polyoxoniobates, les alkoxydes de niobium de formule $Nb(OR_1)_5$ où $R_1$ est un radical alkyle, l'oxalate de niobium $Nb(HC_2O_4)_5$, le niobate d'ammonium. On utilise de préférence l'oxalate de niobium ou le niobate d'ammonium.

Les sources d'éléments du groupe VIIA qui peuvent être utilisées sont bien connues de l'Homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

L'imprégnation du matériau cristallin à porosité hiérarchisée et organisée avec la phase active et les éventuels métaux du groupe VB, VIIB et ceux choisis parmi Si, B, P, est suivie d'un séchage, a pression réduite ou pas, à une température comprise entre 50 et 300°C et d'une éventuelle calcination à une température comprise entre 300 et 1000°C et plus précisément entre 450 et 550°C pendant une durée de 1 à 24 heures et de façon préférée pendant une durée de 2 à 6 heures.

Les catalyseurs préparé selon l'invention peuvent être fabriqués et employés sous la forme de poudre, de poudre compactée concassée tamisée, de pastilles, de granulés, de tablettes, d'anneaux, de billes, de roues, de sphères ou d'extrudés, de préférence sous la forme de poudre compactée concassée tamisée, de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

<u>Procédés de traitement de charges hydrocarbonées selon l'invention</u>

L'invention porte également sur les procédés pour le traitement des coupes hydrocarbonées utilisant le <u>catalyseur préparé selon l'invention.</u>

Plus particulièrement, l'invention porte sur un procédé d'hydrocraquage et/ou d'hydroconversion ainsi que sur un procédé pour l'hydrotraitement de charges hydrocarbonées utilisant le <u>catalyseur préparé selon l'invention.</u>

Le procédé d'hydrocraquage et/ou d'hydroconversion et le procédé d'hydrotraitement selon l'invention opèrent en présence d'hydrogène, à une température supérieure à 200°C, sous une pression supérieure à 1 MPa, la vitesse spatiale étant comprise entre 0,1 et 20 h$^{-1}$ et la quantité d'hydrogène introduite est telle que le rapport volumique litre d'hydrogène/litre d'hydrocarbure soit compris entre 80 et 5000 l/l.

Les catalyseurs préparés selon l'invention sont utilisés avantageusement pour l'hydrocraquage et/ou l'hydroconversion de coupes hydrocarbonées.

Les catalyseurs préparés selon l'invention peuvent être utilisés pour l'hydrotraitement de charges hydrocarbonées, ledit procédé d'hydrotraitement peut être placé seul ou en amont d'un procédé d'hydrocraquage et/ou d'hydroconversion sur un catalyseur d'hydrocraquage à base de zéolithe ou d'alumine-silice, comprenant de préférence du nickel et du tungstène.

<u>Sulfuration des catalyseurs</u>

Préalablement à l'injection de la charge, les catalyseurs utilisés dans le procédé selon la présente invention sont de préférence soumis préalablement à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur, soit ex-situ.

Une méthode de sulfuration classique bien connue de l'Homme du métier consiste à chauffer le catalyseur en présence d'hydrogène sulfuré (pur ou par exemple sous flux d'un mélange hydrogène/hydrogène sulfuré) à une température comprise entre 150 et 800°C, de préférence entre 250 et 600°C, généralement dans un e zone réactionnelle à lit traversé.

<u>Réduction des catalyseurs à base de métaux nobles</u>

Préalablement à l'injection de la charge, le catalyseur d'hydrocraquage à base de métaux nobles peut être préalablement soumis à un traitement de réduction permettant de transformer, au moins en partie, les oxydes de métaux nobles en métaux nobles réduits. Une des méthodes préférées pour réaliser la réduction du catalyseur est un traitement sous hydrogène à une température comprise entre 150 et 650°C et à une pression totale comprise entre 0,1 et 20 MPa. Notons également que toute méthode de réduction ex-situ peut convenir. A titre d'exemple, une réduction peut comprendre un maintien à une température de 150°C pendant 2 heures, suivi par une montée en température jusqu'à 350°C à raison de 1°C par minute, puis un maintien à 350°C pendant 2 heures. Pendant ce traitement de réduction, le débit d'hydrogène peut être de 1000 litres d'hydrogène par litre de catalyseur.

<u>Charges</u>

Des charges très variées peuvent être traitées par les procédés selon l'invention décrits ci-dessus. Généralement elles contiennent au moins 20% volume et souvent au moins 80% volume de composés bouillant au-dessus de 340°C.

La charge peut être par exemple des LCO (Light Cycle Oil (gazoles légers issus d'une unité de craquage catalytique)), des distillats atmosphériques, des distillats sous vide par exemple gasoils issus de la distillation directe du brut ou d'unités de conversion telles que le FCC, le coker ou la viscoréduction, ainsi que des charges provenant d'unités d'extraction d'aromatiques des bases d'huile lubrifiante ou issues du déparaffinage au solvant des bases d'huile lubrifiante, ou encore des distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, ou encore la charge peut être une huile désasphaltée, ou encore tout mélange des charges précédemment citées. La liste ci-dessus n'est pas limitative. Les paraffines issues du procédé Fischer-Tropsch sont exclues. En général, les charges ont un point d'ébullition T5 supérieur à 340°C, et mieux encore supérieur à 370°C, c'est à dire que 95% des composés présents dans la charge ont un point d'ébullition supérieur à 340°C, et mieux encore sup érieur à 370°C.

La teneur en azote des charges traitées dans les procédés selon l'invention est usuellement supérieure à 500 ppm poids, de préférence comprise entre 500 et 10000 ppm poids, de manière plus préférée entre 700 et 4000 ppm poids et de manière encore plus préférée entre 1000 et 4000 ppm poids. La teneur en soufre des charges traitées dans les procédés selon l'invention est usuellement comprise entre 0,01 et 5% poids, de manière préférée comprise entre 0,2 et 4% poids et de manière encore plus préférée entre 0,5 et 3 % poids.

La charge peut éventuellement contenir des métaux. La teneur cumulée en nickel et vanadium des charges traitées dans les procédés selon l'invention est de préférence inférieure à 1 ppm poids.

La teneur en asphaltènes est généralement inférieure à 3000 ppm poids, de manière préférée inférieure à 1000 ppm poids, de manière encore plus préférée inférieure à 200 ppm poids.

Lits de garde

Dans le cas où la charge contient des composés de type résines et/ou asphaltènes, il est avantageux de faire passer au préalable la charge sur un lit de catalyseur ou d'adsorbant différent du catalyseur d'hydrocraquage et/ou d'hydroconversion ou d'hydrotraitement. Les catalyseurs ou lits de garde utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadées, multilobées (2, 3, 4 ou 5 lobes par exemple), sous forme d'anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre de mode de réalisation préféré, avoir des formes géométriques plus particulières afin d'augmenter leur fraction de vide. La fraction de vide de ces catalyseurs est comprise entre 0,2 et 0,75. Leur diamètre extérieur peut varier entre 1 et 35 mm. Parmi les formes particulières possibles sans que cette liste soit limitative, nous citons : les cylindres creux, les anneaux creux, les anneaux de Raschig, les cylindres creux dentelés, les cylindres creux crénelés, les roues de charrettes pentaring, les cylindres à multiples trous, etc..

Ces catalyseurs ou lits de garde peuvent avoir été imprégnés par une phase active ou non. De manière préférée, les catalyseurs sont imprégnés par une phase hydrodéshydrogénante. De manière très préférée, la phase CoMo ou NiMo est utilisée.

Ces catalyseurs ou lits de garde peuvent présenter de la macroporosité. Les lits de garde peuvent être commercialisés par Norton-Saint-Gobain, par exemple les lits de garde MacroTrap®. Les lits de garde peuvent être commercialisés par Axens dans la famille ACT ou HMC : ACT077, ACT935, ACT961 ou HMC841, HMC845, HMC941 ou HMC945. Il peut être particulièrement avantageux de superposer ces catalyseurs dans au moins deux lits différents de hauteurs variables. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Les lits de garde préférés selon l'invention sont les HMC et l'ACT961.

Conditions opératoires

Les conditions opératoires telles que température, pression, débit et taux de recyclage d'hydrogène, vitesse spatiale horaire, pourront être très variables en fonction de la nature de la charge, de la qualité des produits désirés et des installations dont dispose le raffineur. Le catalyseur d'hydrocraquage/hydroconversion ou d'hydrotraitement est généralement mis en contact, en présence d'hydrogène, avec les charges décrites précédemment, à une température supérieure à 200°C, souvent comprise en tre 250 et 480°C, avantageusement comprise entre 320 et 450°C, de préférence entre 330 et 435°C, sous une pression supérieure à 1 MPa, souvent comprise entre 2 et 25 MPa, de manière préférée entre 3 et 20 MPa, la vitesse spatiale étant comprise entre 0,1 et 20 h$^{-1}$ et de préférence 0,1-6 h$^{-1}$, de préférence, 0,2-3 h$^{-1}$, et la quantité d'hydrogène introduite est telle que le rapport volumique litre d'hydrogène/litre d'hydrocarbure soit compris entre 80 et 5000 l/l et le plus souvent entre 100 et 2000 l/l.

Ces conditions opératoires utilisées dans les procédés selon l'invention permettent généralement d'atteindre des conversions par passe, en produits ayant des points d'ébullition inférieurs à 340°C, et mieux inférieurs à 370°C, supérieures à 15% et de manière encore plus préférée comprises entre 20 et 95%.

Modes de réalisation

Les procédés d'hydrocraquage et/ou hydroconversion mettant en oeuvre les catalyseurs préparés selon l'invention couvrent les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.
Le catalyseur préparé selon la présente invention peut être utilisé seul, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un catalyseur d'hydroraffinage situé en amont du catalyseur de la présente invention.
Le catalyseur préparé selon la présente invention peut être utilisé seul, dans un seul ou plusieurs réacteurs en lit bouillonnant, dans un schéma d'hydrocraquage dit en une étape, avec ou sans recyclage liquide de la fraction non convertie, éventuellement en association avec un catalyseur d'hydroraffinage situé dans un réacteur en lit fixe ou en lit bouillonnant en amont du catalyseur de la présente invention.
Le lit bouillonnant s'opère avec retrait de catalyseur usé et ajout journalier de catalyseur neuf afin de conserver une activité du catalyseur stable.

Procédé dit en une étape

L'hydrocraquage dit en une étape, comporte en premier lieu et de façon générale un hydroraffinage poussé qui a pour but de réaliser une hydrodéazotation et une désulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de la charge, en fractions plus légères, qui reste insuffisante et doit donc être complétée sur le catalyseur d'hydrocraquage plus actif. Cependant, il est à noter qu'aucune séparation n'intervient entre les deux types de catalyseurs. La totalité de l'effluent en sortie de réacteur est injectée sur le catalyseur d'hydrocraquage proprement dit et ce n'est qu'ensuite qu'une séparation des produits formés est réalisée. Cette version de l'hydrocraquage, encore appelée "Once Through", possède une variante qui présente un recyclage de la fraction non convertie vers le réacteur en vue d'une conversion plus poussée de la charge.

Procédé dit en une étape en lit fixe

Pour les catalyseurs à faible teneur en silice, les teneurs pondérales en silice du support entrant dans la composition du catalyseur sont comprises entre 5 et 30% et de préférence entre 5 et 20%.
Pour les catalyseurs à forte teneur en silice, les teneurs pondérales en silice du support entrant dans la composition du catalyseur sont comprises entre 20 et 80% et de préférence entre 30 et 60%.
Dans le cas où le catalyseur préparé selon la présente invention est utilisé en amont d'un catalyseur zéolithique d'hydrocraquage, par exemple à base de zéolithe Y, on utilisera avantageusement un catalyseur présentant une faible teneur pondérale en silice telle que définie précédemment. Il pourra aussi être avantageusement utilisé en association avec un catalyseur d'hydroraffinage, ce dernier étant situé en amont du catalyseur de la présente invention.
Lorsque le catalyseur préparé selon la présente invention est utilisé en amont d'un catalyseur d'hydrocraquage à base d'alumine-silice ou à base de zéolithe, dans le même réacteur dans des lits catalytiques distincts ou dans des réacteurs distincts, la conversion est généralement (ou de préférence) inférieure à 50% poids et de manière préférée inférieure à 40%.
Le catalyseur préparé selon l'invention peut être utilisé en amont ou en aval du catalyseur zéolithique. En aval du catalyseur zéolithique, il permet de craquer les HPA. Par HPA, on entend les hydrocarbures polyaromatiques tels que décrits notamment dans l'ouvrage "Hydrocracking, Science and Technology" de J.Scherzer, Editions M.Dekker Incorporated, 1996.

Procédé dit en une étape en lit bouillonnant

Le catalyseur préparé selon l'invention peut être utilisé seul dans un ou plusieurs réacteur(s). Dans le cadre d'un tel procédé, on pourra utiliser avantageusement plusieurs réacteur(s) en série, le ou les réacteur(s) en lit bouillonnant contenant le catalyseur préparé selon l'invention étant précédé d'un ou plusieurs réacteur(s) contenant au moins un catalyseur d'hydroraffinage en lit fixe ou en lit bouillonnant.
Lorsque le catalyseur préparé selon la présente invention est utilisé en aval d'un catalyseur d'hydroraffinage, la conversion de la fraction de la charge occasionnée par ce catalyseur d'hydroraffinage est généralement (ou de préférence) inférieure à 30% poids et de manière préférée inférieure à 25%.

Procédé dit en une étape en lit fixe avec séparation intermédiaire

Le catalyseur préparé selon la présente invention peut aussi être utilisé dans un procédé d'hydrocraquage dit en une étape comportant une zone d'hydroraffinage, une zone permettant l'élimination partielle de l'ammoniaque, par exemple par un flash chaud, et une zone comportant un catalyseur d'hydrocraquage. Ce procédé d'hydrocraquage de charges hydrocarbonées en une étape pour la production dé distillats moyens et éventuellement de bases huiles comporte au moins une première zone réactionnelle d'hydroraffinage, et au moins une deuxième zone réactionnelle, dans laquelle est opéré l'hydrocraquage d'au moins une partie de l'effluent de la première zone réactionnelle. Ce procédé comporte également une séparation incomplète de l'ammoniaque de l'effluent sortant de la première zone. Cette séparation est avantageusement effectuée au moyen d'un flash chaud intermédiaire. L'hydrocraquage opéré en deuxième zone réactionnelle est réalisé en présence d'ammoniaque en quantité inférieure à la quantité présente dans la charge, de préférence inférieure à 1500 ppm poids, de manière plus préférée inférieure à 1000 ppm poids et de manière encore plus préférée inférieure à 800 ppm poids d'azote. Le catalyseur préparé de la présente invention est utilisé de préférence dans la zone réactionnelle d'hydrocraquage en association ou non avec un catalyseur d'hydroraffinage situé en amont du catalyseur préparé de la présente invention.

Le catalyseur préparé selon l'invention peut également être utilisé dans la première zone réactionnelle en prétraitement convertissant, seul ou en association avec un catalyseur d'hydroraffinage classique, situé en amont du catalyseur préparé selon l'invention, dans un ou plusieurs lit(s) catalytique(s), dans un ou plusieurs réacteur(s).

Procédé d'hydrocraquage dit en une étape avec hydroraffinage préliminaire sur catalyseur d'acidité faible.

Le catalyseur préparé selon l'invention peut être utilisé dans un procédé d'hydrocraquage comprenant :

- une première zone réactionnelle d'hydroraffinage dans laquelle la charge est mise en contact avec au moins un catalyseur d'hydroraffinage présentant dans le test standard d'activité, défini dans le brevet français n°2 840 621, un taux de conversion du cyclohexane inférieur à 10% massique,

- une deuxième zone réactionnelle d'hydrocraquage dans laquelle une partie au moins de l'effluent issu de l'étape d'hydroraffinage est mise en contact avec au moins un catalyseur d'hydrocraquage présentant dans le test standard d'activité un taux de conversion du cyclohexane supérieur à 10% massique, le catalyseur préparé selon l'invention étant présent dans au moins une des deux zones réactionnelles.

La proportion du volume catalytique de catalyseur d'hydroraffinage représente généralement 20 à 45% du volume catalytique total.

L'effluent issu de la première zone réactionnelle est au moins en partie, de préférence en totalité, introduit dans la deuxième zone réactionnelle dudit procédé. Une séparation intermédiaire des gaz peut être réalisée comme décrite précédemment

L'effluent en sortie de deuxième zone réactionnelle est soumis à une séparation dite finale (par exemple par distillation atmosphérique éventuellement suivie d'une distillation sous vide), de manière à séparer les gaz. Il est obtenu au moins une fraction liquide résiduelle, contenant essentiellement des produits dont le point d'ébullition est généralement supérieur à 340°C, qui peut être au moins en partie recyclée en amont de la deuxième zone réactionnelle du procédé selon l'invention, et de préférence en amont du catalyseur d'hydrocraquage à base d'alumine-silice, dans un objectif de production de distillats moyens.

La conversion en produits ayant des points d'ébullition inférieurs à 340°C, ou encore inférieurs à 370°C est d'au moins 50% poids.

Procédé dit en deux étapes

Dans un schéma d'hydrocraquage dit en deux étapes avec séparation intermédiaire entre les deux zones réactionnelles, dans une étape donnée, le catalyseur la présente invention peut-être utilisé dans l'un ou dans les deux réacteurs en association ou non avec un catalyseur d'hydroraffinage situé en amont du catalyseur préparé selon la présente invention. L'hydrocraquage en deux étapes, comporte une première étape qui a pour objectif, comme dans le procédé "une étape", de réaliser l'hydroraffinage de la charge, mais aussi d'atteindre une conversion de cette dernière de l'ordre en général de 40 à 60%. L'effluent issu de la première étape subit ensuite une séparation (distillation) appelée le plus souvent séparation intermédiaire, qui a pour objectif de séparer les produits de conversion de la fraction non convertie. Dans la deuxième étape d'un procédé d'hydrocraquage en deux étapes, seule la fraction de la charge non convertie lors de la première étape, est traitée. Cette séparation permet à un procédé d'hydrocraquage deux étapes d'être plus sélectif en distillats moyens (kérosène + diesel) qu'un procédé en une étape. En effet, la séparation intermédiaire des produits de conversion évite leur "sur-craquage" en naphta et gaz dans la deuxième étape sur le catalyseur d'hydrocraquage. Par ailleurs, il est à noter que la fraction non convertie de la charge traitée dans la deuxième étape contient en général de très faibles teneurs en $NH_3$ ainsi qu'en composés azotés organiques, en général moins de 20 ppm poids voire moins de 10 ppm poids.

Les configurations de lits catalytiques en lit fixe ou en lit bouillonnant décrites dans le cas d'un procédé dit en une étape peuvent être utilisées dans la première étape d'un schéma dit en deux étapes, que le catalyseur préparé selon l'invention soit utilisé seul ou en association avec un catalyseur d'hydroraffinage classique.

Pour les procédés dits en une étape et pour la première étape des procédés d'hydrocraquage en deux étapes, les catalyseurs préférés préparés selon l'invention sont les catalyseurs dopés à base d'éléments du groupe VIII non nobles, de manière encore plus préférée les catalyseurs à base de nickel et de tungstène, l'élément dopant préféré étant le phosphore.

Les catalyseurs utilisés dans la deuxième étape des procédés d'hydrocraquage en deux étapes sont de préférence les catalyseurs dopés à base d'éléments nobles du groupe VIII, de manière encore plus préférée les catalyseurs à base de platine et/ou de palladium, l'élément dopant préféré étant le phosphore.

Hydrotraitement/hydroraffinage de charges hydrocarbonées selon l'invention

Les catalyseurs préparés selon l'invention sont utilisés pour l'hydrotraitement et l'hydroraffinage de charges hydrocarbonées telles que les coupes pétrolières, les coupes issues du charbon ou les hydrocarbures produits à partir du gaz naturel et plus particulièrement pour l'hydrogénation, l'hydrodésulfuration, l'hydrodéazotation, l'hydrodéoxygénation, l'hydrodésaromatisation et l'hydrodémétallation de charges hydrocarbonées contenant des composés aromatiques et/ou oléfiniques et/ou naphténiques et/ou paraffiniques, lesdites charges contenant éventuellement des métaux et/ou de l'azote et/ou de l'oxygène et/ou du soufre.

Plus particulièrement, les charges employées dans les procédés d'hydrotraitement sont des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent en général des hétéroatomes tels que le soufre, l'oxygène et l'azote et/ou au moins un métal.

Comme rappelé précédemment, les catalyseurs préparés selon l'invention peuvent être utilisés dans un grand nombre d'applications d'hydroraffinage ou d'hydrotraitement. Les conditions opératoires qui peuvent être appliquées dans ces procédés sont habituellement : une température de 200 à 450° C, de façon préférée entre 250 et 440°C, une pression de 1 à 25 MPa, de façon préférée entre 1 et 18 MPa, une vitesse volumique horaire de 0,1 à 20 h$^{-1}$, de façon préférée entre 0,2 et 5 h$^{-1}$, un rapport hydrogène/charge exprimé en volume d'hydrogène, mesuré dans les conditions normales de température et pression, par volume de charge liquide généralement de 80 l/l à 5000 l/l et le plus souvent de 100 l/l à 2000 l/l.

Les exemples suivants illustrent la présente invention sans toutefois en limiter la portée.

## EXEMPLES

Dans les exemples qui suivent, la technique aérosol utilisée est celle décrite ci-dessus dans l'exposé de l'invention.

Pour chacun des exemples des supports S1 et S3 ci-dessous, on calcule le rapport $V_{inorganique}/V_{organique}$ du mélange issu de l'étape b). Ce rapport est défini comme suit : $V_{inorganique}/V_{organique} = (m_{inorg} * \rho_{org}) / (m_{org} * \rho_{inorg})$ où $m_{inorg}$ est la masse finale de la fraction inorganique sous forme d'oxyde(s) condensé(s), à savoir $SiO_2$ et $AlO_2$, dans la particule élémentaire solide obtenue par atomisation, $m_{org}$ est la masse totale de la fraction organique non volatile se retrouvant dans la particule élémentaire solide obtenue par atomisation, à savoir le tensioactif et l'agent structurant, $\rho_{org}$ et $\rho_{inorg}$ sont les densités respectivement associées aux fractions organique non volatile et inorganique. Dans les exemples qui suivent, on considère que $\rho_{org} = 1$ et $\rho_{inorg} = 2$. Aussi le rapport $V_{inorganique}/V_{organique}$ est calculé comme étant égal à $V_{inorganique}/V_{organique} = (m_{SiO2} + m_{AlO2}) / [2*(m_{agent\ structurant} + m_{tensioactif})]$. L'éthanol, la soude, l'eau n'entrent pas en compte dans le calcul dudit rapport $V_{inorganique}/V_{organique}$.

Exemple 1 : préparation d'un catalyseur C1 (invention)

Mise en forme du support S1

Préparation selon le premier procédé de préparation du matériau présent dans le catalyseur préparé selon l'invention d'un matériau S1 à porosité hiérarchisée et organisée dans les domaines de la microporosité et de la mésoporosité dont les parois microporeuses et cristallisées sont constituées d'entités zéolithiques aluminosilicates de type ZSM-5 telles que le rapport molaire Si/Al = 49.

6,86 g d'une solution d'hydroxyde de tétrapropylammonium (TPAOH 40% en masse dans une solution aqueuse) sont ajoutés à 0,37 g de sec-butoxyde d'aluminium (Al(O$^s$C$_4$H$_9$)$_3$). Après 30 min sous vive agitation à température ambiante, 27 g d'eau déminéralisée et 18,75 g de tétraéthylorthosilicate (TEOS) sont ajoutés. Le tout est laissé sous vive agitation à température ambiante pendant 18 heures de manière à obtenir une solution limpide. A cette solution est alors ajoutée une solution contenant 66,61 g d'éthanol, 61,24 g d'eau et 5,73 g de tensioactif F127 (pH du mélange = 13,5). Le rapport $V_{inorganique}/V_{organique}$ du mélange est égal à 0,32. Le tout est laissé sous agitation pendant 10 minutes. L'ensemble est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange $O_2/N_2$ dans des tubes en PVC. Elles sont ensuite introduites dans un four réglé à une température de séchage fixée à 350°C. La poudre récoltée est alors séchée 18 heures à l'étuve à 95°C. 100 mg de cette poudre sont placés dans un autoclave de 1 l en présence de 0,6 ml d'eau distillée. L'autoclave est porté à 95°C pendant 48 heures. La poudre est ensuite séchée à 100°C à l'étuve puis calcinée sous air pendant 5 h à 550°C. Le solide est caractérisé par DRX aux bas angles et aux grands angles, par volumétrie à l'azote, par MET, par MEB, par FX. L'analyse MET montre que le matériau final présente une mésoporosité organisée caractérisée par une structure vermiculaire. L'analyse par Volumétrie à l'azote combinée à l'analyse par la méthode $\alpha_s$ conduit à une valeur du volume microporeux $V_{micro}$ ($N_2$) de 0,19 ml/g, une valeur du volume mésoporeux $V_{méso}$ ($N_2$) de 0,48 ml/g et une surface spécifique du matériau final de S = 760 m$^2$/g. Le diamètre mésoporeux $\phi$ caractéristique de la matrice mésostructurée est de 6,5 nm. L'analyse DRX aux petits angles conduit à la visualisation d'un pic de corrélation à l'angle $2\theta$ = 0,79°. La relation de Bragg 2 d * sin ($\theta$) = 1,5406 permet de calculer la distance d de corrélation entre les mésopores organisés du matériau, soit d = 11 nm. L'épaisseur des parois du matériau mésostructuré définie par e = d - $\phi$ est donc de e = 4,5 nm. L'analyse DRX aux grands angles conduit à la visualisation de pics de diffraction aux angles $2\theta$ = 7,9° et 8,9° compatibles avec la structure cristalline MFI de la zéolithe ZSM-5. Le rapport molaire Si/Al obtenu par FX est de 49. Un cliché MEB des particules élémentaires sphériques ainsi obtenues indique que ces particules ont une taille caractérisée par un diamètre variant de 50 à 3000 nm, la distribution en taille de ces particules étant centrée autour de 300 nm. Le matériau ainsi synthétisé est utilisé sous la forme de poudre compactée concassée tamisée.

On obtient ainsi le support S1.

Préparation du catalyseur d'hydrocraquage conforme à l'invention C1

Le catalyseur C1 est obtenu par imprégnation à sec du support S1 sous forme de poudre compactée concassée tamisée par une solution aqueuse renfermant des sels de tungstène et de nickel. Le sel de tungstène est le métatungstate d'ammonium $(NH_4)_6H_2W_{12}O_{40}$*$4H_2O$ et celui de nickel est le nitrate de nickel $Ni(NO_3)_2$*$6H_2O$. Après maturation à température ambiante dans une atmosphère saturée en eau, la poudre compactée concassée tamisée est séchée à 120°C pendant une nuit puis calcinée à 500°C sous air sec. Les teneurs massiques en $WO_3$, NiO du catalyseur C1 sont respectivement de 29,7% et 3,6%.

Les caractéristiques du catalyseur C1 sont les suivantes :

La surface BET est de 280 m$^2$/g.
Le diamètre mésoporeux moyen, mesuré par porosimétrie au mercure, est de 6,3 nm.

Exemple 2 : préparation d'un catalyseur C2 (invention)

Mise en forme du support S2

Préparation selon le deuxième procédé de préparation du matériau présent dans le <u>catalyseur préparé selon l'invention</u> d'un matériau S2 à porosité hiérarchisée et organisée dans les domaines de la microporosité et de la mésoporosité dont les parois microporeuses et cristallisées sont constituées d'entités zéolithiques aluminosilicates de type ZSM-5 telles que le rapport molaire Si/Al = 49.

6,86 g d'une solution d'hydroxyde de tétrapropylammonium (TPAOH 40% en masse dans une solution aqueuse) sont ajoutés à 0,37 g de sec-butoxyde d'aluminium (Al(O$^s$C$_4$H$_9$)$_3$). Après 30 min sous vive agitation à température ambiante, 27 g d'eau déminéralisée et 18,75 g de tétraéthylorthosilicate (TEOS) sont ajoutés. Le tout est laissé sous vive agitation à température ambiante pendant 18 heures. Cette solution est placée dans une étuve à 80°C pendant 25 h de manière à obtenir une solution colloïdale contenant des nanocristaux de zéolithe de type ZSM-5 ayant une taille voisine de 50 nm (analyse par diffusion de la lumière et par MET). A cette suspension refroidie à température ambiante est alors ajoutée une solution contenant 66,61 g d'éthanol, 61,24 g d'eau et 0,17 g de tensioactif F127 (pH du mélange = 13,5). Le rapport $V_{inorganique}/V_{organique}$ du mélange est égal à 0,92. Le tout est laissé sous agitation pendant 10 minutes. L'ensemble est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange $O_2/N_2$ dans des tubes en PVC. Elles sont ensuite introduites dans un four réglé à une température de séchage fixée à 350°C. La poudre récoltée est alors séchée 18 heures à l'étuve à 95°C. 100 mg de cette poudre sont placés dans un autoclave de 1 l en présence de 0,6 ml d'eau distillée. L'autoclave est porté à 95°C pendant 48 heures. La poudre est ensuite séchée à 100°C à l'étuve puis calcinée sous air pendant 5 h à 550°C. Le solide est caractérisé par DRX aux grands angles, par volumétrie à l'azote, par MET, par MEB, par FX. L'analyse MET montre que le matériau final présente une mésoporosité organisée caractérisée par une structure vermiculaire. L'analyse par Volumétrie à l'azote combinée à l'analyse par la méthode $\alpha_s$ conduit à une valeur du volume microporeux $V_{micro}$ ($N_2$) de 0,15 ml/g, une valeur du volume mésoporeux $V_{méso}$ ($N_2$) de 0,55 ml/g et une surface spécifique du matériau final de S = 310 m²/g. Le diamètre mésoporeux $\phi$ caractéristique de la matrice mésostructurée est de 19 nm. L'analyse MET couplée à l'analyse de Volumétrie d'adsorption à l'azote conduit à une valeur de l'épaisseur des parois de l'ordre de 50 nm. L'analyse DRX aux grands angles conduit à la visualisation de pics de diffraction aux angles $2\theta = 7,9°$ et $8,9°$ compatibles avec la structure cristalline MFI de la zéolithe ZSM-5. Le rapport molaire Si/Al obtenu par FX est de 49. Un cliché MEB des particules élémentaires sphériques ainsi obtenues indique que ces particules ont une taille caractérisée par un diamètre variant de 50 à 3000 nm, la distribution en taille de ces particules étant centrée autour de 300 nm. Le matériau ainsi synthétisé est utilisé sous la forme de poudre compactée concassée tamisée.

On obtient ainsi le support S2.

Préparation du catalyseur d'hydrocraquage conforme à l'invention C2

Le catalyseur C2 est obtenu par imprégnation à sec du support S2 sous forme de poudre compactée concassée tamisée par une solution aqueuse renfermant des sels de tungstène et de nickel. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, la poudre compactée concassée tamisée est séchée à 120°C pendant une nuit puis calcinée à 500°C sous air sec. Les teneurs massiques en $WO_3$, NiO du catalyseur C2 sont respectivement de 29,6% et 3,7%.

Les caractéristiques du catalyseur C2 sont les suivantes :

La surface BET est de 220 m²/g.
Le diamètre mésoporeux moyen, mesuré par porosimétrie au mercure, est de 18,8 nm.

Exemple 3 : préparation d'un catalyseur C3 (invention)

Mise en forme du support S3

Préparation selon le troisième procédé de préparation du matériau présent dans le <u>catalyseur préparé selon l'invention</u> d'un matériau S3 hiérarchisée et organisée dans les domaines de la microporosité et de la mésoporosité dont les parois microporeuses et cristallisées sont constituées d'entités zéolithiques de zéolithe Béta (BEA) telles que le rapport molaire Si/Al = 29.

2,37 g d'une solution d'hydroxyde de tétraéthylammonium (TEAOH 40% en masse dans une solution aqueuse) sont ajoutés à 0,48 g de sec-butoxyde d'aluminium $(Al(O^sC_4H_9)_3)$. Après 30 min sous vive agitation à température ambiante, 8,94 g d'eau déminéralisée et 5,97 g de tétraéthylorthosilicate (TEOS) sont ajoutés. Le tout est laissé sous vive agitation à température ambiante pendant 5 jours de manière à obtenir une solution limpide. 3,6 g de nanocristaux de zéolithe Béta (BEA) brute de synthèse (Si/Al=60), de taille égale à 40 nm, sont ajoutés à cette solution et dispersés par sonification pendant 1 heure. Est alors ajoutée une solution contenant 66,61 g d'éthanol, 61,24 g d'eau et 0,23 g de tensioactif F127 (pH du mélange = 11,5). Le rapport $V_{inorganique}/V_{organique}$ du mélange est égal à 2,38. Le tout est laissé sous agitation pendant 10 minutes et la dispersion des cristaux est parfaite par sonification pendant 30 minutes. L'ensemble est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange $O_2/N_2$ dans des tubes en PVC. Elles sont ensuite introduites dans un four réglé à une température de séchage fixée à 350°C. La poudre récoltée est alors séchée 18 heure s à l'étuve à 95°C. 100 mg de cette poudre sont placés dans un autoclave de 1 l en présence de 0,6 ml d'eau distillée. L'autoclave est porté à 95°C pendant 48 heures. La poudre est ensuite séchée à 100°C à l'étuve puis calcinée sous air pendant 5 h à 550°C. Le solide est caractérisé par DRX aux grands angles, par volumétrie à l'azote, par MET, par MEB, par FX. L'analyse MET montre que le matériau final présente une mésoporosité organisée caractérisée par une structure vermiculaire. L'analyse par Volumétrie à l'azote combinée à l'analyse par la méthode $\alpha_s$ conduit à une valeur du volume microporeux $V_{micro}$ ($N_2$) de 0,21 ml/g, une valeur du volume mésoporeux $V_{méso}$ ($N_2$) de 0,41 ml/g et une surface spécifique du matériau final de S = 410 m²/g. Le diamètre mésoporeux $\phi$ caractéristique de la matrice mésostructurée est de 18 nm. L'analyse MET couplée à l'analyse de Volumétrie d'adsorption à l'azote conduit à une valeur de l'épaisseur des parois de l'ordre de 50 nm. L'analyse DRX aux grands angles conduit à la visualisation de pics de diffraction à l'angle $2\theta = 7,7°$ compatible avec la structure cristalline BEA de la zéolithe Béta. Le rapport molaire Si/Al obtenu par FX est de 29. Un cliché MEB des particules élémentaires sphériques ainsi obtenues indique que ces particules ont une taille caractérisée par un diamètre variant de 50 à 3000 nm, la distribution en taille de ces particules étant centrée autour de 300 nm. Le matériau ainsi synthétisé est utilisé sous la forme de poudre compactée concassée tamisée.

On obtient ainsi le support S3.

Préparation du catalyseur d'hydrocraquage conforme à l'invention C3

Le catalyseur C3 est obtenu par imprégnation à sec du support S3 sous forme de poudre compactée concassée tamisée par une solution aqueuse renfermant des sels de tungstène et de nickel. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, la poudre compactée concassée tamisée est séchée à 120°C pendant une nuit puis calcinée à 500°C sous air sec. Les teneurs massiques en $WO_3$, NiO du catalyseur C3 sont respectivement de 28,9% et 3,8%.

Les caractéristiques du catalyseur C3 sont les suivantes :

La surface BET est de 295 $m^2$/g.
Le diamètre mésoporeux moyen, mesuré par porosimétrie au mercure, est de 17,7 nm.

Exemple 4 : préparation d'un catalyseur C4 (invention)

Le catalyseur C4 est obtenu par imprégnation à sec du support S3 sous forme de poudre compactée concassée tamisée par une solution aqueuse renfermant des sels de tungstène et de nickel et d'acide phosphorique $H_3PO_4$. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, la poudre compactée concassée tamisée est séchée à 120°C pend ant une nuit puis calcinée à 500°C sous air sec. Les teneurs massiques en $WO_3$, NiO, $P_2O_5$ du catalyseur C4 sont respectivement de 28,8%, 3,6% et 2,1 %.

Les caractéristiques du catalyseur C4 sont les suivantes :

La surface BET est de 273 $m^2$/g.
Le diamètre mésoporeux moyen, mesuré par porosimétrie au mercure, est de 17,5 nm.

Exemple 5 : évaluation des catalyseurs C1, C2, C3, C4 en hydrocraquage d'un distillat sous vide en une étape à haute pression positionnés dans le 2nd réacteur, le réacteur d'hydrocraquage

Les catalyseurs C1, C2, C3, C4 dont la préparation est décrite dans les exemple 1,2,3,4 sont utilisés pour réaliser l'hydrocraquage d'un distillat sous vide préalablement hydrotraité dont les principales caractéristiques sont fournies dans le tableau 1, et préalablement additivé avec 1250 ppm de N et 2,8% de S. Cette charge est représentative de la charge en sortie d'un réacteur d'hydrotraitement dans un schéma d'hydrocraquage 1 étape sans recyclage.

Tableau 1 : caractéristiques du distillat sous vide hydrotraité non additivé

| Densité à 15°C | 0,8670 |
|---|---|
| Soufre (% poids) | 0 |
| Azote (ppm poids) | 0 |
| Distillation simulée | |
| Point 5% | 211°C |
| Point 50% | 411°C |
| Point 95% | 513°C |

Les catalyseurs C1, C2, C3, C4 ont été mis en oeuvre selon le procédé de l'invention en utilisant une unité pilote comportant 1 réacteur à lit fixe traversé, les fluides circulent de bas en haut (up-flow).

Préalablement au test d'hydrocraquage, les catalyseurs sont sulfurés à 14 MPa, à 350°C au moyen d'un gasoil de distillation directe additionné de 2% poids de DMDS (diméthyl disulfure).

Après sulfuration, les tests catalytiques ont été effectués dans les conditions suivantes : pression totale : 14 MPa,

débit d'hydrogène : 1000 litres d'hydrogène gazeux par litre de charge injectée,

vitesse spatiale (VVH) est égale à 1 h$^{-1}$,

température : température requise pour atteindre 80% de conversion nette.

Afin de simuler la pression partielle de $NH_3$ et de $H_2S$ libérés dans le réacteur d'hydroraffinage, la charge est constituée du DSV hydrotraité additivé de 1250 ppm de N et 2,8% de S.

Les performances catalytiques sont exprimées par la température requise pour atteindre 80% conversion nette en produits ayant un point d'ébullition inférieurs à 370°C et par la sélectivité brute en distillat moyen (coupe 150-370°C). La conversion et la sélectivité sont exprimées à partir des résultats de distillation simulée.

La conversion nette en produits ayant un point d'ébullition inférieurs à 370°C, notée CN 370°C, est prise égale à :

$$\text{CN } 370°C = [ (\% \text{ de } 370°C^{-}_{\text{effluents}}) - (\% \text{ de } 370°C^{-}_{\text{charge}}) ] / [ 100 - (\% \text{ de } 370°C^{-}_{\text{charge}}) ]$$

avec

% de 370°C $^{-}_{\text{effluents}}$ = teneur massique en composés ayant des points d'ébullition inférieurs à 370°C dans les effluents, et

% de 370°C $^{-}_{\text{charge}}$ = teneur massique en composés ayant des points d'ébullition inférieurs à 370°C dans la charge.

La sélectivité brute en distillat moyen coupe 150-370°C, notée SB DM, est prise égale à :

$$\text{SB DM} = [(\text{fraction en } 150 - 370^{-}_{\text{effluents}})] / [(\% \text{ de } 370°C^{-}_{\text{effluents}})].$$

Les performances catalytiques obtenues sont données dans le tableau 2 ci-après.

Tableau 2 : résultats catalytiques en hydrocraquage une étape et haute pression

| Catalyseur | VVh (h$^{-1}$) | Température nécessaire pour obtenir 80% de CN 370°C en % poids | SB DM en % poids |
|---|---|---|---|
| C1 | 1 | 394°C | 75,8 |
| C2 | 1 | 391°C | 75,1 |
| C3 | 1 | 386°C | 72,5 |
| C4 | 1 | 385°C | 72,2 |

Les exemples précédents montrent donc tout l'intérêt d'utiliser un catalyseur préparé selon l'invention pour réaliser l'hydrocraquage de charges hydrocarbonées. En effet, les catalyseurs préparés selon l'invention permettent d'obtenir des conversions élevées de la charge et des sélectivités en distillats moyens très intéressantes, grâce à une plus grande proximité des sites acides et des sites hydrogénants, ce qui évite le surcraquage des réactifs.

Exemple 6 : évaluation des catalyseurs C1, C2, C3, C4 en hydrocraquage d'un distillat sous vide en une étape à haute pression. Les catalyseurs de l'invention sont placés dans le réacteur d'hydroraffinage en enchaînement avec un catalyseur d'hydrotraitement.

Les catalyseurs C1, C2, C3, C4 dont les préparations sont décrites dans les exemples 1, 2, 3, 4 sont utilisés dans les conditions de l'hydrocraquage de distillats sous vide à pression élevée (14 MPa). Les catalyseurs C1, C2, C3, C4 sont utilisés en association avec un catalyseur d'hydroraffinage, ce dernier étant situé en amont du catalyseur préparé selon l'invention. Les catalyseurs préparés selon l'invention amorcent la conversion en fin de lit dans le réacteur d'hydrotraitement.

Les principales caractéristiques de la charge pétrolière sont fournies dans le tableau 3.

Tableau 3 : caractéristiques du distillats sous vide

| Densité à 15°C | 0,926 |
|---|---|
| Soufre (% poids) | 2,03 |

(suite)

| | |
|---|---|
| Azote (ppm poids) | 1527 |
| Distillation simulée | |
| Point 5% | 375°C |
| Point 10% | 393°C |
| Point 50% | 458°C |
| Point 90% | 535°C |
| Point final | 587°C |

L'unité de test catalytique comprend deux réacteurs en lit fixe, à circulation ascendante de la charge ("up-flow"). Dans chacun des réacteurs, on introduit 40 ml de catalyseur. Dans le premier réacteur, celui dans lequel la charge passe en premier, on introduit le catalyseur de première étape d'hydrotraitement HRK558 vendu par la société Axens comprenant un élément du groupe VI et un élément du groupe VIII déposés sur alumine. Dans le second réacteur, celui dans lequel la charge passe en dernier, on introduit le catalyseur préparé selon l'invention (C1, C2, C3, C4). Les deux catalyseurs subissent une étape de sulfuration in-situ avant réaction. Les catalyseurs sont sulfurés à 14 MPa, à 350°C au moyen d'un gasoil de distillation directe additionné de 2% poids de DMDS. Une fois la sulfuration réalisée, la charge décrite ci-dessus peut être transformée.

Les tests catalytiques ont été effectués dans les conditions suivantes :

pression totale : 14 MPa,
débit d'hydrogène : 1000 litres d'hydrogène gazeux par litre de charge injectée,
vitesse spatiale (VVH) est égale à 0,7 h$^{-1}$,
température : température requise pour atteindre 60% de conversion nette en sortie du second réacteur. La conversion nette en produits ayant un point d'ébullition inférieurs à 370°C, notée CN 370°C, est prise égale à :

$$CN\ 370°C = [\ (\%\ de\ 370°C\ ^-_{effluents\ R2}) - (\%\ de\ 370°C\ ^-_{effluents\ R1})\ ]\ /\ [\ 100 - (\%\ de\ 370°C\ ^-_{effluents\ R1})]$$

avec
% de 370°C $^-_{effluents\ Rx}$ = teneur massique en composés ayant des points d'ébullition inférieurs à 370°C dans les effluents du réacteur x correspondant,

La sélectivité brute en distillat moyen coupe 150-370°C, notée SB DM, est prise égale à :

$$SB\ DM = [(fraction\ en\ 150 - 370\ _{effluents\ R2})]\ /\ [(\ \%\ de\ 370°C\ ^-_{effluents\ R2})].$$

Les performances catalytiques sont exprimées par la température requise pour atteindre 60% conversion nette en produits ayant un point d'ébullition inférieurs à 370°C, par la sélectivité brute en distillat moyen (coupe 150-370°C). La conversion et la sélectivité sont exprimées à partir des résultats de distillation simulée.

Dans le tableau 4 suivant, nous avons reporté la température de réaction nécessaire pour obtenir 60% de conversion nette en et la sélectivité brute pour les catalyseurs préparés selon l'invention.

Tableau 4 : résultats catalytiques en hydrocraquage une étape et haute pression en association avec un catalyseur d'hydroraffinage

| Catalyseur | VVh (h$^{-1}$) | Température nécessaire pour obtenir 60% de CN 370°C en % poids | SB DM en % poids |
|---|---|---|---|
| C1 | 0,7 | 386°C | 79,6 |
| C2 | 0,7 | 384°C | 79,8 |
| C3 | 0,7 | 380°C | 77,4 |

(suite)

| Catalyseur | VVh (h⁻¹) | Température nécessaire pour obtenir 60% de CN 370°C en % poids | SB DM en % poids |
|---|---|---|---|
| C4 | 0,7 | 381°C | 77,4 |

Les exemples précédents montrent donc tout l'intérêt d'utiliser un catalyseur préparé selon l'invention pour réaliser l'hydrocraquage de charges hydrocarbonées. En effet, les catalyseurs préparés selon l'invention permettent d'obtenir des conversions élevées de la charge et des sélectivités en distillats moyens très intéressantes, grâce à une plus grande proximité des sites acides et des sites hydrogénants, ce qui évite le surcraquage des réactifs.

Exemple 7 : évaluation des catalyseurs C1, C2, C3, C4 en hydrocraquage d'un distillat sous vide en une étape à pression modérée (hydrocraquage doux) dans un schéma où les catalyseurs sont en enchaînement

Les catalyseurs C1, C2, C3, C4 dont les préparations sont décrites dans les exemples 1, 2, 3, 4 sont utilisés dans les conditions de l'hydrocraquage doux de distillats sous vide à pression modérée (6 MPa). Les catalyseurs C1, C2, C3, C4 sont utilisés en enchaînement avec un catalyseur d'hydroraffinage, ce dernier étant situé en amont du catalyseur préparé selon l'invention. Les principales caractéristiques de la charge pétrolière sont fournies dans le tableau 5.

Tableau 5 : caractéristiques du distillat sous vide

| Densité à 15°C | 0,923 |
|---|---|
| Soufre (% poids) | 2,36 |
| Azote (ppm poids) | 857 |
| Distillation simulée | |
| Point 5% | 346°C |
| Point 50% | 450°C |
| Point 95% | 543°C |
| Point final | 568°C |

L'unité de test catalytique comprend deux réacteurs en lit fixe, à circulation ascendante de la charge ("up-flow"). Dans chacun des réacteurs, on introduit 40 ml de catalyseur. Dans le premier réacteur, celui dans lequel la charge passe en premier, on introduit le catalyseur de première étape d'hydrotraitement HRK558 vendu par la société Axens comprenant un élément du groupe VI et un élément du groupe VIII déposés sur alumine. Dans le second réacteur, celui dans lequel la charge passe en dernier, on introduit le catalyseur préparé selon l'invention (C1, C2, C3, C4). Les deux catalyseurs subissent une étape de sulfuration in-situ avant réaction. Les catalyseurs sont sulfurés à 6 MPa, à 350°C au moyen d'un gasoil de distillation directe additionné de 2% poids de DMDS. Une fois la sulfuration réalisée, la charge décrite ci-dessus peut être transformée.

Après sulfuration, les tests catalytiques ont été effectués dans les conditions suivantes : pression totale : 6 MPa, débit d'hydrogène : 450 litres d'hydrogène gazeux par litre de charge injectée, vitesse spatiale (VVH) est égale à 1 h⁻¹, température : température requise pour atteindre 50% de conversion nette en sortie du second réacteur. La conversion nette en produits ayant un point d'ébullition inférieurs à 370°C, notée CN 370°C, est prise égale à :

$$CN\ 370°C = [\ (\%\ de\ 370°C^-_{effluents\ R2}) - (\%\ de\ 370°C^-_{charge\ en\ entrée})\ ]\ /\ [\ 100 - (\%\ de\ 370°C^-_{charge\ en\ entrée})]$$

avec
% de 370°C⁻ effluents R2 = teneur massique en composés ayant des points d'ébullition inférieurs à 370°C dans les effluents du 2ème réacteur,
et

% de 370°C ⁻ <sub>charge en entrée</sub> = teneur massique en composés ayant des points d'ébullition inférieurs à 370°C dans la charge en entrée du 1<sup>er</sup> réacteur.

Les performances catalytiques sont exprimées par la température requise pour atteindre 50% conversion nette en produits ayant un point d'ébullition inférieurs à 370°C et par la sélectivité brute en distillats moyens (coupe 150-370°C). La conversion et la sélectivité sont exprimées à partir des résultats de distillation simulée.

Les performances catalytiques obtenues sont données dans le tableau 6 ci-après.

Tableau 6 : résultats catalytiques en hydrocraquage doux à pression modérée

| Catalyseur | VVH (h⁻¹) | Température nécessaire pour obtenir 50% de CN 370°C en % poids | SB DM en % poids |
|---|---|---|---|
| C1 | 1 | 397°C | 79,7 |
| C2 | 1 | 395°C | 79,5 |
| C3 | 1 | 390°C | 78,8 |
| C4 | 1 | 391°C | 78,7 |

L'exemple précédent montre donc tout l'intérêt d'utiliser un <u>catalyseur préparé selon l'invention</u> pour réaliser l'hydrocraquage de charges hydrocarbonées. En effet, le <u>catalyseur préparé selon l'invention</u> permet d'obtenir des conversions très élevées de la charge et des sélectivités en distillats moyens très intéressantes, grâce à une plus grande proximité des sites acides et des sites hydrogénants, ce qui évite de craquer a nouveau les réactifs.

**Revendications**

**1.** Procédé de préparation d'un catalyseur comprenant :

- la préparation d'au moins un support formé d'au moins un matériau cristallisé comprenant du silicium à porosité hiérarchisée et organisée et constitué d'au moins deux particules sphériques élémentaires sous la forme d'agrégats, chacune desdites particules sphériques comprenant une matrice à base d'oxyde de silicium, mésotructurée, ayant un diamètre uniforme de mésopores compris entre 1,5 et 30 nm et présentant des parois microporeuses et cristallisées, constituées exclusivement d'entités zéolithiques comprenant au moins une zéolithe choisie parmi les aluminosilicates ZSM-5, ZSM-48, ZSM-22, ZSM-23, ZBM-30, EU-1, EU-2, EU-11, Bêta, zéolithe A, Y, USY, VUSY, SDUSY, mordénite, NU-87, NU-88, NU-86, NU-85, IM-5, IM-12, IZM-2 et Ferriérite et/ou au moins un solide apparenté choisi parmi les silicoaluminophosphates SAPO-11 et SAPO-34, d'épaisseur comprise entre 1,5 et 60 nm, lesdites particules sphériques élémentaires ayant un diamètre maximal de 200 μm, ledit matériau cristallisé étant obtenu par un procédé comprenant les étapes suivantes :

a) la préparation d'un mélange réactionnel contenant les éléments précurseurs d'entités zéolithiques, à savoir au moins un agent structurant, au moins un précurseur silicique et au moins un précurseur d'au moins un élément X, ledit mélange réactionnel étant soit aqueux, soit aquo-organique, l'agent structurant étant basique ou le mélange réactionnel étant basifié par l'ajout d'un composé basique choisi parmi les hydroxydes de métaux alcalins, et ledit mélange réactionnel étant mis sous conditions hydrothermales sous pression autogène, à température ambiante pendant une durée comprise entre 15 et 20 heures jusqu'à la formation d'une solution limpide ; b) le mélange en solution d'au moins un tensioactif et d'au moins ladite solution limpide obtenue selon a) tel que le rapport des volumes de matières inorganique et organique $V_{inorganique}/V_{organique}$ soit compris entre 0,26 et 4 ; c) l'atomisation par aérosol de ladite solution obtenue à l'étape b) pour conduire à la formation de gouttelettes sphériques ; d) le séchage desdites gouttelettes par transport via un gaz vecteur O2/N2 dans des tubes en PVC et passage dans un four dont la température varie de 50 à 600°C, le temps de résidence étant de l'ordre de la seconde ; e) l'autoclavage des particules obtenues selon d) en présence d'un solvant, le volume de solvant introduit étant introduit dans la gamme de 0,01 à 20% par rapport au volume de l'autoclave choisi, à une température comprise entre 50 et 200°C, pendant une période de 1 à 196 heures ; f) le séchage desdites particules obtenues selon e) en étuve à une température comprise entre 50 et 150°C et g) l'élimination dudit agent structurant et dudit tensioactif ou

a') la préparation d'un mélange réactionnel renfermant au moins un agent structurant, au moins un précurseur silicique et au moins un précurseur d'au moins un élément X, ledit mélange réactionnel étant soit aqueux, soit aquo-organique, l'agent structurant étant basique ou le mélange réactionnel étant basifié par l'ajout d'un composé basique choisi parmi les hydroxydes de métaux alcalins, et ledit mélange réactionnel étant mis sous conditions hydrothermales sous pression autogène, à une température comprise entre 50 et 200°C jusqu'à la formation de nanocristaux zéolithiques de taille nanométrique maximale égale à 60 nm, afin d'obtenir une solution colloïdale dans laquelle lesdits nanocristaux zéolithiques se trouvent à l'état dispersé ; b') le mélange en solution d'au moins un tensioactif et d'au moins ladite solution obtenue selon a') tel que le rapport des volumes de matières inorganique et organique $V_{inorganique}/V_{organique}$ soit compris entre 0,26 et 4 ; c') l'atomisation par aérosol de ladite solution obtenue à l'étape b') pour conduire à la formation de gouttelettes sphériques ; d') le séchage desdites gouttelettes par transport via un gaz vecteur O2/N2 dans des tubes en PVC et passage dans un four dont la température varie de 50 à 600°C, le temps de résidence étant de l'ordre de la seconde

; et g') l'élimination dudit agent structurant et dudit tensioactif ;

ou

a") la redispersion en solution de cristaux zéolithiques de façon à obtenir une solution colloïdale de nanocristaux zéolithiques de taille nanométrique maximale égale à 60 nm, b") le mélange en solution d'au moins un tensioactif, d'au moins ladite solution colloïdale obtenue selon a") et d'au moins une solution limpide contenant les éléments précurseurs d'entités zéolithiques, à savoir au moins un agent structurant, au moins un précurseur silicique et au moins un précurseur d'au moins un élément X telle que définie à l'étape a),

ledit mélange étant tel que le rapport des volumes de matières inorganique et organique $V_{inorganique}/V_{organique}$ soit compris entre 0,26 et 4 ; c") l'atomisation par aérosol de ladite solution obtenue à l'étape b") pour conduire à la formation de gouttelettes sphériques ; d") le séchage desdites gouttelettes par transport via le gaz vecteur O2/N2 dans des tubes en PVC et passage dans un four dont la température varie de 50 à 600°C, le temps de résidence étant de l'ordre de la seconde ; e") l'autoclavage des particules obtenues selon d") en présence d'un solvant, le volume de solvant introduit étant introduit dans la gamme de 0,01 à 20% par rapport au volume de l'autoclave choisi, à une température comprise entre 50 et 200°C, pendant une période de 1 à 196 heures ; f") le séchage desdites particules obtenues selon e") en étuve à une température comprise entre 50 et 150°C et g") l'élimination dudit agent structurant et dudit tensioactif ; la solution obtenue à l'issue des étapes b), b' et b") ; présentant un pH>9 ; l'agent structurant étant choisi parmi les cations organiques azotés, les éléments de la famille des alcalins, des éthercouronnes et les diamines, le précurseur silicique étant choisi parmi la silice solide en poudre, l'acide silicique, la silice colloïdale, la silice dissoute et le tétraéthoxysilane (TEOS), l'élément X étant choisi parmi l'aluminium, le fer, le germanium, le bore et le titane ;

- le mélange dudit matériau cristallin à porosité hiérarchisée et organisée avec au moins une phase active contenant au moins un élément hydro-déshydrogénant du groupe VIB et /ou du groupe VIII de la classification périodique.

2. Procédé selon la revendication 1 dans lequel ledit élément hydro-déshydrogénant de ladite phase active choisi dans le groupe formé par les éléments du groupe VIB de la classification périodique est le molybdène.

3. Procédé selon la revendication 1 dans lequel ledit élément hydro-déshydrogénant de ladite phase active choisi dans le groupe formé par les éléments du groupe VIB de la classification périodique est le tungstène.

4. Procédé selon la revendication 1 dans lequel ledit élément hydro-déshydrogénant choisi dans le groupe formé par les éléments du groupe VIII de la classification périodique, est choisi parmi le cobalt, le nickel et le platine.

5. Procédé selon la revendication 1 dans lequel ladite phase active est formée d'au moins un élément du groupe VIB et d'au moins un élément du groupe VIII.

6. Procédé selon la revendication 1 dans lequel ledit élément du groupe VIII est le nickel et ledit élément du groupe VIB est le tungstène.

7. Procédé d'hydrocraquage et/ou d'hydroconversion de charges hydrocarbonées utilisant le catalyseur préparé selon l'une des revendications 1 à 6 opérant en présence d'hydrogène, à une température supérieure à 200°C, sous une pression supérieure à 1 MPa, la vitesse spatiale étant comprise entre 0,1 et 20 h$^{-1}$ et la quantité d'hydrogène introduite est telle que le rapport volumique litre d'hydrogène / litre d'hydrocarbure soit compris entre 80 et 5000 l/l.

8. Procédé d'hydrocraquage et/ou d'hydroconversion selon la revendication 7 tel qu'il est réalisé selon le procédé dit en une étape.

9. Procédé d'hydrocraquage et/ou d'hydroconversion selon la revendication 7 tel qu'il est réalisé selon le procédé dit en deux étapes.

10. Procédé d'hydrotraitement de charges hydrocarbonées utilisant le catalyseur préparé selon l'une des revendications 1 à 6 opérant en présence d'hydrogène, à une température supérieure à 200°C, sous une pression supérieure à 1 MPa, la vitesse spatiale étant comprise entre 0,1 et 20 h⁻¹ et la quantité d'hydrogène introduite est telle que le rapport volumique litre d'hydrogène / litre d'hydrocarbure soit compris entre 80 et 5000 l/l.

11. Procédé selon la revendication 10 tel qu'il est placé en amont d'un procédé d'hydrocraquage et/ou hydroconversion.

12. Procédé selon l'une des revendications 7 à 11 dans lequel les charges hydrocarbonées sont choisies dans le groupe formé par les LCO (light cycle oil : gazoles légers issus d'une unité de craquage catalytique), les distillats atmosphériques, les distillats sous vide, les charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, les huiles désasphaltées, seules ou en mélange.

**Patentansprüche**

1. Verfahren zur Herstellung eines Katalysators, umfassend:

- Herstellen mindestens eines Trägers, gebildet aus mindestens einem kristallierten Material, umfassend Silicium mit hierarchisierter und organisierter Porosität und bestehend aus mindestens zwei kugelförmigen Elementarteilchen in Form von Aggregaten, wobei jedes der kugelförmigen Teilchen eine Matrix auf der Basis von mesostrukturiertem Siliciumdioxid mit einen einheitlichen Mesoporen-Durchmesser im Bereich zwischen 1,5 und 30 nm hat und mikroporöse und kristallisierte Wände aufweist, die ausschließlich aus zeolithischen Einheiten bestehen, umfassend mindestens einen Zeolithen, ausgewählt aus den Alumosilicaten ZSM-5, ZSM-48, ZSM-22, ZSM-23, ZBM-30, EU-1, EU-2, EU-11, Beta, Zeolith A, Y, USY, VUSY, SDUSY, Mordenit, NU-87, NU-88, NU-86, NU-85, IM-5, IM-12, IZM-2 und Ferrierit und/oder mindestens einem verwandten Feststoff, ausgewählt aus den Silicoalumophosphaten SAPO-11 und SAPO-34, mit einer Dicke im Bereich zwischen 1,5 und 60 nm, wobei die kugelförmigen Elementarteilchen einen maximalen Durchmesser von 200 μm aufweisen, wobei das kristallisierte Material durch ein Verfahren erhalten wird, das die folgenden Schritte umfasst:

a) Herstellen eines Reaktionsgemischs, das die Vorläuferelemente der zeolithischen Einheiten enthält, nämlich mindestens einen Strukturgeber, mindestens einen Siliciumvorläufer und mindestens einen Vorläufer mindestens eines Elements X, wobei das Reaktionsgemisch entweder wässrig oder wässrig-organisch ist, wobei der Strukturgeber basisch ist oder das Reaktionsgemisch durch die Zugabe einer basischen Verbindung, ausgewählt aus den Alkalimetallhydroxiden, basisch gemacht wird und wobei das Reaktionsgemisch hydrothermischen Bedingungen unter autogenem Druck bei Umgebungstemperatur für eine Dauer im Bereich zwischen 15 und 20 Stunden bis zur Bildung einer klaren Lösung ausgesetzt wird;
b) Mischen mindestens eines Tensids in Lösung und mindestens der nach a) erhaltenen klaren Lösung, so dass das Volumenverhältnis von anorganischen zu organischen Materialien $V_{anorganische}/V_{organische}$ im Bereich zwischen 0,26 und 4 liegt;
c) Aerosolzerstäuben der in Schritt b) erhaltenen Lösung, um zur Bildung von kugelförmigen Tröpfchen zu führen;
d) Trocknen der Tröpfchen durch Transport über ein O2/N2-Vektorgas in PVC-Röhren und Übergang in einen Ofen, dessen Temperatur von 50 bis 600 °C variiert, wobei die Verweildauer im Sekundenbereich liegt;
e) Autoklavieren der gemäß d) erhaltenen Teilchen in Gegenwart eines Lösemittels, wobei das Volumen des eingeführten Lösemittels im Bereich von 0,01 bis 20 %, bezogen auf das gewählte Autoklavenvolumen, bei einer Temperatur im Bereich zwischen 50 und 200 °C während eines Zeitraums von 1 bis 196 Stunden eingeführt wird;
f) Trocknen der gemäß e) erhaltenen Teilchen im Trockenofen bei einer Temperatur im Bereich zwischen 50 und 150 °C und
g) Entfernen des Strukturgebers und des Tensids;

oder

a') Herstellen eines Reaktionsgemischs, das mindestens einen Strukturgeber, mindestens einen Siliciumvorläufer und mindestens einen Vorläufer mindestens eines Elements X einschließt, wobei das Reaktionsgemisch entweder wässrig oder wässrig-organisch ist, wobei der Strukturgeber basisch ist oder das Reaktionsgemisch durch die Zugabe einer basischen Verbindung, ausgewählt aus den Alkalimetallhydroxiden, basisch gemacht wird, und das Reaktionsgemisch hydrothermischen Bedingungen unter autogenem Druck bei einer Temperatur im Bereich zwischen 50 und 200 °C bis zur Bildung von zeolithischen Nanokristallen mit einer maximalen Nanometergröße gleich 60 nm ausgesetzt wird, um eine kolloidale Lösung zu erhalten, in der sich die zeolithischen Nanokristalle in dispergiertem Zustand befinden;

b') Mischen mindestens eines Tensids in Lösung und mindestens der nach a') erhaltenen Lösung, so dass das Volumenverhältnis von anorganischen zu organischen Materialien $V_{anorganische}/V_{organische}$ im Bereich zwischen 0,26 und 4 liegt;

c') Aerosolzerstäuben der in Schritt b) erhaltenen Lösung, um zur Bildung von kugelförmigen Tröpfchen zu führen;

d') Trocknen der Tröpfchen durch Transport über ein O2/N2-Vektorgas in PVC-Röhren und Übergang in einen Ofen, dessen Temperatur von 50 bis 600 °C variiert, wobei die Verweildauer im Sekundenbereich liegt; und

g') Entfernen des Strukturgebers und des Tensids;

oder

a") Redispergieren von zeolithischen Kristallen in Lösung, um eine kolloidale Lösung aus zeolithischen Nanokristallen mit einer maximalen Nanometergröße gleich 60 nm zu erhalten,

b") Mischen mindestens eines Tensids in Lösung und mindestens der nach a") erhaltenen kolloidalen Lösung und mindestens einer klaren Lösung, die die Vorläuferelemente von zeolithischen Einheiten, nämlich mindestens einen Strukturgeber, mindestens einen Siliciumvorläufer und mindestens einen Vorläufer mindestens eines Elements X, wie in Schritt a) definiert, enthält, wobei das Gemisch so ist, dass das Volumenverhältnis von anorganischen zu organischen Materialien $V_{anorganische}/V_{organische}$ im Bereich zwischen 0,26 und 4 liegt;

c") Aerosolzerstäuben der in Schritt b") erhaltenen Lösung, um zur Bildung von kugelförmigen Tröpfchen zu führen;

d") Trocknen der Tröpfchen durch Transport über ein O2/N2-Vektorgas in PVC-Röhren und Übergang in einen Ofen, dessen Temperatur von 50 bis 600 °C variiert, wobei die Verweildauer im Sekundenbereich liegt;

e") Autoklavieren der gemäß d") erhaltenen Teilchen in Gegenwart eines Lösemittels, wobei das Volumen des eingeführten Lösemittels in der Spanne von 0,01 bis 20 %, bezogen auf das gewählte Autoklavenvolumen, bei einer Temperatur im Bereich zwischen 50 und 200 °C während eines Zeitraums von 1 bis 196 Stunden eingeführt wird;

f") Trocknen der nach e") erhaltenen Teilchen im Trockenofen bei einer Temperatur im Bereich zwischen 50 und 150 °C und

g") Entfernen des Strukturgebers und des Tensids;

wobei die am Ende der Schritte b), b') und b") erhaltene Lösung basisch ist; einen pH-Wert von >9 aufweist; wobei der Strukturgeber ausgewählt ist aus den stickstoffhaltigen organischen Kationen, den Elementen der Alkalifamilie, den Kronenethern und den Diaminen, wobei der Siliciumvorläufer ausgewählt ist aus pulverförmigem festem Siliciumdioxid, Kieselsäure, kolloidalem Siliciumdioxid, gelöstem Siliciumdioxid und Tetraethoxysilan (TEOS), wobei das Element X ausgewählt ist aus Aluminium, Eisen, Germanium, Bor und Titan;

- Mischen des kristallinen Materials mit hierarchisierter und organisierter Porosität mit mindestens einer aktiven Phase, die mindestens ein hydrierendes-dehydrierendes Element der Gruppe VIB und/oder der Gruppe VIII des Periodensystems der Elemente enthält.

2. Verfahren nach Anspruch 1, wobei das hydrierende-dehydrierende Element der aktiven Phase, das aus der Gruppe, gebildet aus den Elementen der Gruppe VIB des Periodensystems der Elemente ausgewählt ist, Molybdän ist.

3. Verfahren nach Anspruch 1, wobei das hydrierende-dehydrierende Element der aktiven Phase, das aus der Gruppe, gebildet aus den Elementen der Gruppe VIB des Periodensystems ausgewählt ist, Wolfram ist.

4. Verfahren nach Anspruch 1, wobei das hydrierende-dehydrierende Element, das aus der Gruppe, gebildet aus den Elementen der Gruppe VIII des Periodensystems der Elemente ausgewählt ist, aus Cobalt, Nickel und Platin ausgewählt ist.

5. Verfahren nach Anspruch 1, wobei die aktive Phase aus mindestens einem Element der Gruppe VIB und mindestens einem Element der Gruppe VIII gebildet wird.

6. Verfahren nach Anspruch 1, wobei das Element der Gruppe VIII Nickel ist und das Element der Gruppe VIB Wolfram ist.

7. Verfahren zum Hydrokracken und/oder zur Hydrokonversion von Kohlenwasserstoffbeschickungen, das den Katalysator nach einem der Ansprüche 1 bis 6 bei einem Druck von mehr als 1 MPa verwendet, wobei die Raumgeschwindigkeit im Bereich zwischen 0,1 und 20 h$^{-1}$ liegt und die eingeführte Wasserstoffmenge so ist, dass das Volumenverhältnis Liter Wasserstoff/Liter Kohlenwasserstoff im Bereich zwischen 80 und 5.000 l/l liegt.

8. Verfahren zum Hydrokracken und/oder zur Hydrokonversion nach Anspruch 7, wobei es gemäß dem sogenannten Einschrittverfahren ausgeführt wird.

9. Verfahren zum Hydrokracken und/oder zur Hydrokonversion nach Anspruch 7, wobei es gemäß dem sogenannten Zweischrittverfahren ausgeführt wird.

10. Verfahren zur Hydrobehandlung von Kohlenwasserstoffbeschickungen, das den gemäß einem der Ansprüche 1 bis 6 hergestellten Katalysator verwendet, der in Gegenwart von Wasserstoff bei einer Temperatur von mehr als 200 °C, bei einem Druck von mehr als 1 MPa arbeitet, wobei die Raumgeschwindigkeit im Bereich zwischen 0,1 und 20 h$^{-1}$ liegt und die eingeführte Wasserstoffmenge so ist, dass das Volumenverhältnis Liter Wasserstoff/Liter Kohlenwasserstoff im Bereich zwischen 80 und 5.000 l/l liegt.

11. Verfahren nach Anspruch 10, wobei es stromaufwärts eines Verfahrens zum Hydrokracken und/oder zur Hydrokonversion angeordnet ist.

12. Verfahren nach einem der Ansprüche 7 bis 11, wobei die Kohlenwasserstoffbeschickungen ausgewählt sind aus der Gruppe bestehend aus LCO (Light Cycle Oil: leichte Gasöle aus einer Einheit zum katalytischen Kracken), atmosphärischen Destillaten, Vakuumdestillaten, Beschickungen, die aus Einheiten zur Aromatenextraktion von Schmierölgrundstoffen stammen oder aus der Lösemittelentparaffinierung von Schmierölgrundstoffen stammen, Destillate, die aus Verfahren zur Entschwefelung oder zur Hydrokonversion im Festbett oder in brodelnder Wirbelschicht von AR (atmosphärischen Rückständen) und/oder VR (Vakuumrückständen) und/oder entasphaltierten Ölen stammen, allein oder als Mischung.

## Claims

1. A process for preparing a catalyst, comprising:

   • preparing at least one support formed by at least one crystalline material comprising silicon with a hierarchical and organized porosity and constituted by at least two elementary spherical particles in the form of aggregates, each of said spherical particles comprising a matrix based on oxide of silicon, which is mesostructured, having a uniform mesopore diameter in the range 1.5 to 30 nm and having microporous and crystalline walls exclusively constituted by zeolitic entities comprising at least one zeolite selected from the aluminosilicates ZSM-5, ZSM-48, ZSM-22, ZSM-23, ZBM-30, EU-1, EU-2, EU-11, beta, zeolite A, Y, USY, VUSY, SDUSY, mordenite, NU-87, NU-88, NU-86, NU-85, IM-5, IM-12, IZM-2 and ferrierite and/or at least one related solid selected from the silicoaluminophosphates SAPO-11 and SAPO-34 with a thickness in the range 1.5 to 60 nm, said elementary spherical particles having a maximum diameter of 200 $\mu$m, said crystalline material being obtained by a process comprising the following steps:

     a) preparing a reaction mixture containing the precursor elements of zeolitic entities, namely at least one template, at least one silicic precursor, and at least one precursor of at least one element X, said reaction mixture being either aqueous or aquo-organic, the template being basic or the reaction mixture being rendered basic by adding a basic compound selected from alkali metal hydroxides, and said reaction mixture being placed under hydrothermal conditions under autogenous pressure, at ambient temperature for a period in the range 15 to 20 hours until a clear solution is formed; b) mixing, in solution, at least one surfactant and at least said clear solution obtained in a) such that the ratio of the volumes of the inorganic and organic materials, $V_{inorganic}/V_{organic}$, is in the range 0.26 to 4; c) atomizing, by aerosol, said solution obtained in step b) to result in the formation of spherical droplets; d) drying said droplets by transport via an $O_2/N_2$ vector gas in PVC tubes and passage through a furnace the temperature of which is from 50°C to 600°C, the residence time being of the order of one second; e) autoclaving the particles obtained in d) in the presence of a solvent, the volume of introduced solvent being in the range 0.01% to 20% with respect to the volume of the autoclave selected, at a temperature in the range 50°C to 200°C, for a period of 1 to 196 hours; f) drying said particles obtained in e) in an oven at a temperature in the range 50°C to 150°C; and g) eliminating said template and said surfactant;

or

a') preparing a reaction mixture comprising at least one template, at least one silicic precursor and at least one precursor of at least one element X, said reaction mixture being either aqueous or aquo-organic, the template being basic or the reaction mixture being rendered basic by adding a basic compound selected from alkali metal hydroxides, and said reaction mixture being placed under hydrothermal conditions under autogenous pressure at a temperature in the range 50°C to 200°C until zeolitic nanocrystals with a maximum nanometric dimension of 60 nm are formed, in order to obtain a colloidal solution in which said zeolitic nanocrystals are in the dispersed state; b') mixing, in solution, at least one surfactant and at least said solution obtained in a') such that the ratio of the volumes of the inorganic and organic materials, $V_{inorganic}/V_{organic}$, is in the range 0.26 to 4; c') atomizing, by aerosol, said solution obtained in step b') to result in the formation of spherical droplets; d') drying said droplets by transport via an $O_2/N_2$ vector gas in PVC tubes and passage through a furnace the temperature of which is from 50°C to 600°C, the residence time being of the order of one second; and g') eliminating said template and said surfactant;

or

a") redispersing zeolitic nanocrystals in solution so as to obtain a colloidal solution of zeolitic nanocrystals with a maximum nanometric dimension of 60 nm; b") mixing, in solution, at least one surfactant, at least said colloidal solution obtained in
a") and at least one clear solution containing the precursor elements of zeolitic entities, namely at least one template, at least one silicic precursor and at least one precursor of at least one element X as defmed in step a), said mixture being such that the ratio of the volumes of the inorganic and organic materials, $V_{inorganic}/V_{organic}$, is in the range 0.26 to 4; c") atomizing, by aerosol, said solution obtained in step b") to result in the formation of spherical droplets; d") drying said droplets by transport via an $O_2/N_2$ vector gas in PVC tubes and passage through a furnace the temperature of which is from 50°C to 600°C, the residence time being of the order of one second;
e") autoclaving the particles obtained in d") in the presence of a solvent, the volume of introduced solvent being in the range 0.01 % to 20% with respect to the volume of the autoclave selected, at a temperature in the range 50°C to 200°C, for a period of 1 to 196 hours; f") drying said particles obtained in e") in an oven at a temperature in the range 50°C to 150°C; and g") eliminating said template and said surfactant;

the solution obtained at the ends of steps b), b') and b") being basic, having a pH>9;
the template being selected from organic nitrogen-containing cations, elements from the alkali family, crown ethers and diamines, the silicic precursor being selected from solid powdered silica, silicic acid, colloidal silica, dissolved silica and tetraethoxysilane (TEOS), the element X being selected from aluminium, iron, germanium, boron and titanium;
• mixing said crystalline material with a hierarchical and organized porosity with at least one active phase containing at least one hydrodehydrogenating element from group VIB and/or from group VIII of the periodic classification of the elements.

**2.** A process according to claim 1, in which said hydrodehydrogenating element of said active phase selected from the group formed by elements from group VIB of the periodic table of the elements is molybdenum.

**3.** A process according to claim 1, in which said hydrodehydrogenating element of said active phase selected from the group formed by elements from group VIB of the periodic table of the elements is tungsten.

4. A process according to claim 1, in which said hydrodehydrogenating element selected from the group formed by elements from group VIII of the periodic table of the elements is selected from cobalt, nickel and platinum.

5. A process according to claim 1, in which said active phase is formed by at least one element from group VIB and at least one element from group VIII.

6. A process according to claim 1, in which said element from group VIII is nickel and said element from group VIB is tungsten.

7. A process for hydrocracking and/or hydroconversion of hydrocarbon feeds using the catalyst prepared in accordance with one of claims 1 to 6, operated in the presence of hydrogen, at a temperature of more than 200°C, at a pressure of more than 1 MPa, the hourly space velocity being in the range 0.1 to 20 h$^{-1}$ and the quantity of hydrogen introduced being such that the volume ratio of litres of hydrogen/litres of hydrocarbon is in the range 80 to 5000 l/l.

8. A hydrocracking and/or hydroconversion process according to claim 7, carried out in accordance with a once-through process.

9. A hydrocracking and/or hydroconversion process according to claim 7, carried out in accordance with a two-step process.

10. A process for hydrotreating hydrocarbon feeds using the catalyst prepared in accordance with one of claims 1 to 6, operated in the presence of hydrogen, at a temperature of more than 200°C, at a pressure of more than 1 MPa, the hourly space velocity being in the range 0.1 to 20 h$^{-1}$ and the quantity of hydrogen introduced being such that the volume ratio of litres of hydrogen/litres of hydrocarbon is in the range 80 to 5000 l/l.

11. A process according to claim 10, placed upstream of a hydrocracking and/or hydroconversion process.

12. A process according to one of claims 7 to 11, in which the hydrocarbon feeds are selected from the group formed by LCO (light cycle oil: light gas oils from a catalytic cracking unit), atmospheric distillates, vacuum distillates, feeds from units for extracting aromatics from lubricating base oils or from solvent dewaxing of lubricating base oils, distillates deriving from processes for fixed bed or ebullated bed desulphurization or hydroconversion of AR (atmospheric residues) and/or VR (vacuum residues) and/or deasphalted oils, or deasphalted oils, used alone or as a mixture.

**EP 2 296 808 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6669924 B

- FR 2840621

**Littérature non-brevet citée dans la description**

- **G. J. DE A. A. SOLER-ILLIA ; C. SANCHEZ ; B. LEBEAU ; J. PATARIN.** *Chem. Rev.,* 2002, vol. 102, 4093
- **J. S. BECK ; J. C. VARTULI ; W. J. ROTH ; M. E. LEONOWICZ ; C. T. KRESGE ; K. D. SCHMITT ; C. T.-W. CHU ; D. H. OLSON ; E. W. SHEPPARD ; S. B. MCCULLEN.** *J. Am. Chem. Soc.,* 1992, vol. 114 (27), 10834
- **D. ZAHO ; J. FENG ; Q. HUO ; N. MELOSH ; G. H. FREDRICKSON ; B. F. CHMELKE ; G. D. STUCKY.** *Science,* 1998, vol. 279, 548
- **Y. -H. YUE ; A. GÉDÉON ; J. -L. BONARDET ; J. B. D'ESPINOSE ; N. MELOSH ; J. FRAISSARD.** *Stud. Surf. Sci. Catal.,* 2000, vol. 129, 209
- **Z. ZHANG ; Y. HAN ; F. XIAO ; S. QIU ; L. ZHU ; R. WANG ; Y. YU ; Z. ZHANG ; B. ZOU ; Y. WANG.** *J. Am. Chem. Soc.,* 2001, vol. 123, 5014
- **A. KARLSSON ; M. STÖCKER ; R. SCHMIDT.** *Micropor. Mesopor. Mater.,* 1999, vol. 27, 181
- **P. PROKESOVA ; S. MINTOVA ; J. CEJKA ; T. BEIN.** *Micropor. Mesopor. Mater.,* 2003, vol. 64, 165

- **D. T. ON ; S. KALIAGUINE.** *Angew. Chem. Int. Ed.,* 2002, vol. 41, 1036
- Adsorption by powders and porous solids. Principles, methodology and applications. Academic Press, 1999
- **M. JARONIEC ; M. KRUCK ; J. P. OLIVIER.** *Langmuir,* 1999, vol. 15, 5410
- **C. BAERLOCHER ; W. M. MEIER ; D. H. OLSON.** Atlas of zeolite framework types. 2001
- **Y. LIU ; W. Z. ZHANG ; T. J. PINNAVAIA.** *J. Am. Chem. Soc.,* 2000, vol. 122, 8791
- **K. R. KLOETSTRA ; H. W. ZANDBERGEN ; J. C. JANSEN ; H. VANBEKKUM.** *Microporous Mater.,* 1996, vol. 6, 287
- **A. E. PERSSON ; B. J. SCHOEMAN ; J. STERTE ; J. -E. OTTERSTEDT.** *Zeolites,* 1995, vol. 15, 611
- Hydrocracking, Science and Technology. M.Dekker, 1996